# FASCICULE DE BREVET EUROPEEN

(11) **EP 4 020 777 B1**
(45) Date de publication et mention de la délivrance du brevet: **06.09.2023**
(21) Numéro de dépôt: 21217620.0
(22) Date de dépôt: 23.12.2021
(51) Int. Cl.: H02K 17/18, H02K 15/00

(54) **ROTOR POUR UN MOTEUR ÉLECTRIQUE, MOTEUR ÉLECTRIQUE COMPRENANT UN TEL ROTOR ET PROCÉDÉ DE FABRICATION D'UN TEL ROTOR**
ROTOR FÜR EINEN ELEKTROMOTOR, ELEKTROMOTOR MIT EINEM SOLCHEN ROTOR UND HERSTELLUNGSVERFAHREN EINES SOLCHEN ROTORS
ROTOR FOR AN ELECTRIC MOTOR, ELECTRIC MOTOR COMPRISING SUCH A ROTOR AND METHOD FOR MANUFACTURING SUCH A ROTOR

(30) Priorité: 24.12.2020 FR 2014121
(43) Date de publication de la demande: 29.06.2022
(73) Titulaire: Somfy Activites SA, 74300 Cluses (FR)
(72) Inventeur: TOLLANCE, Thierry, 74300 CLUSES (FR); GEORGEAULT, Ronan, 74300 CLUSES (FR); MATEOS, Raphaël, 74300 CLUSES (FR); BRION, Pierre, 74300 CLUSES (FR); MARAULT, Jérôme, 59655 VILLENEUVE D'ASCQ (FR); GILLON, Frédéric, 59655 VILLENEUVE D'ASCQ (FR); HECQUET, Michel, 59655 VILLENEUVE D'ASCQ (FR); TOUNZI, Abdelmounaïm, 59655 VILLENEUVE D'ASCQ (FR)
(74) Mandataire: Lavoix

(56) Documents cités:
- CN-A- 108 352 770
- DE-A1-102013 223 054
- DE-C- 740 689
- RU-C2- 2 208 892
- US-B2- 10 804 760

## Description

La présente invention concerne un rotor pour un moteur électrique, autrement dit un rotor d'un moteur électrique, ainsi qu'un moteur électrique comprenant un tel rotor et un procédé de fabrication d'un tel rotor.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

L'actionneur électromécanique comprend un moteur électrique.

On connaît déjà le document EP-A1-0 314 613 qui décrit un procédé de fabrication d'un rotor à cage d'écureuil pour un moteur électrique à induction comprenant une bague de court-circuit.

De manière connue, ce type de rotor pour un moteur électrique asynchrone est généralement entraîné en rotation par un stator présentant un bobinage réalisé par insertion.

Cependant, ce type de bobinage par insertion présente l'inconvénient d'être difficilement automatisable.

Il est par ailleurs connu d'entraîner en rotation un rotor d'un moteur électrique synchrone à aimants permanents à l'aide d'un stator présentant un bobinage dentaire, pouvant présenter un coût de fabrication sensiblement moins élevé qu'un bobinage réalisé par insertion.

Cependant, ce type de bobinage dentaire n'est généralement pas utilisé dans le cadre de moteurs électriques asynchrones, car un tel bobinage produit des harmoniques de courant circulant dans la cage d'écureuil du rotor et ces harmoniques freinent la rotation du rotor. Il est donc complexe d'obtenir un moteur électrique asynchrone à cage d'écureuil avec bobinage dentaire, car ce type de moteur électrique a un rendement faible.

On connaît également le document FR-A1-2 272 516 qui décrit un moteur électrique à induction à rotor multi-cages et son procédé de fabrication. Le rotor comprend trois cages séparées et peut être fabriqué par moulage.

Cependant, ce type de moteur électrique à rotor multi-cages n'est pas non plus adapté pour être utilisé avec un bobinage dentaire, car les cages multiples ne sont pas symétriques et les barres conductrices de toutes les cages d'écureuil ne sont pas à une distance identique d'un axe central du rotor. Ceci provoque des déséquilibres électriques dans le rotor et, par conséquent, des déséquilibres magnétiques au sein du moteur électrique.

On connaît également le document DE 10 2013 223054 A1 qui décrit un rotor pour un moteur électrique comprenant trois cages d'écureuil et un paquet de tôles. Chaque cage d'écureuil comprend des barres conductrices et trois anneaux de court-circuit à chaque extrémité du rotor. Les barres conductrices sont reliées entre elles par des anneaux de court-circuit. Chaque tôle du paquet de tôles comprend des perçages périphériques de passage des barres conductrices. Les cages d'écureuil sont imbriquées entre elles. Les cages d'écureuil sont décalées angulairement entre elles d'un angle constant. Les cages d'écureuil sont électriquement indépendantes les unes des autres. Toutes les barres conductrices de toutes les cages d'écureuil sont équidistantes de l'axe central du rotor. Le paquet de tôles est de forme cylindrique et comprend une partie centrale et deux extrémités. La partie centrale du paquet de tôles comprend des tôles magnétiques. La partie centrale du paquet de tôles est entièrement traversée par les barres conductrices. Chaque extrémité du paquet de tôles comprend un empilement alternant entre une tôle isolante et un anneau de court-circuit. L'empilement de chacune des deux extrémités du paquet de tôles est mis en oeuvre dans le même ordre selon un axe central du rotor. Chaque extrémité du paquet de tôles comprend autant d'anneaux de court-circuit que le rotor comprend de cages d'écureuil. Deux anneaux de court-circuit adjacents sont décalés angulairement d'un angle égal à l'angle de décalage des cages d'écureuil.

On connaît également le document RU 2 208 892 C2 qui décrit un rotor pour un moteur électrique comprenant un arbre de rotor et trois cages d'écureuil. Chaque cage d'écureuil comprend quatre barres conductrices et trois anneaux de court-circuit. Les barres conductrices sont reliées entre elles par des anneaux de court-circuit. Chaque cage d'écureuil est coaxiale avec un axe central. Les cages d'écureuil sont imbriquées entre elles. Les cages d'écureuil sont décalées angulairement entre elles d'un angle constant. Les cages d'écureuil sont électriquement indépendantes les unes des autres. Toutes les barres conductrices de toutes les cages d'écureuil sont équidistantes de l'axe central du rotor. Le rotor comprend un paquet magnétique. Le paquet magnétique du rotor est de forme cylindrique et comprend une partie centrale et deux extrémités. La partie centrale du paquet magnétique est entièrement traversée par les barres conductrices. Chaque extrémité du paquet magnétique comprend un empilement alternant entre une couche isolante et un anneau de court-circuit. L'empilement de chacune des deux extrémités du rotor est mis en oeuvre dans le même ordre selon l'axe central du rotor. Chaque extrémité du rotor comprend autant d'anneaux de court-circuit que le rotor comprend de cages d'écureuil. Deux anneaux de court-circuit adjacents sont décalés angulairement d'un angle égal à l'angle de décalage des cages d'écureuil.

Cependant, la fabrication de ce type de rotor à cages d'écureuil imbriquées entre elles nécessite un assemblage complexe entre le paquet de tôles, les anneaux de court-circuit et les barres conductrices, et implique, en outre, de recourir à des opérations de soudage ou de brasage pour relier les anneaux de court-circuit aux barres conductrices. Un tel assemblage est donc complexe à réaliser et chronophage. La fabrication de ce type de rotor est donc onéreuse.

C'est à ces inconvénients qu'entend plus particulièrement remédier l'invention en proposant un rotor adapté à être utilisé dans un moteur électrique, dont le stator est à bobinage dentaire, tout en étant plus simple et plus rapide à fabriquer.

À cet effet, la présente invention vise, selon un premier aspect, un rotor pour un moteur électrique comprenant :
- au moins un arbre de rotor, l'arbre de rotor s'étendant selon un axe central du rotor,
- au moins deux cages d'écureuil, chaque cage d'écureuil comprenant au moins deux barres conductrices et au moins deux anneaux de court-circuit, les barres conductrices étant reliées entre elles par au moins deux anneaux de court-circuit, chaque cage d'écureuil étant coaxiale avec l'axe central,
- un paquet de tôles, chaque tôle du paquet de tôles comprenant un perçage central de passage de l'arbre de rotor et des perçages périphériques de passage des barres conductrices,
- les cages d'écureuil étant imbriquées entre elles,
- les cages d'écureuil étant décalées angulairement entre elles d'un angle constant,
- les cages d'écureuil étant toutes électriquement indépendantes,
- toutes les barres conductrices de toutes les cages d'écureuil étant équidistantes de l'axe central du rotor, pour chaque cage d'écureuil, au moins l'un des anneaux de court-circuit étant disposé entre les barres conductrices d'une autre cage d'écureuil,
- le paquet de tôles étant de forme cylindrique et comprenant une partie centrale et deux extrémités,
- la partie centrale du paquet de tôles comprenant des tôles magnétiques,
- la partie centrale du paquet de tôles étant entièrement traversée par l'arbre de rotor et par les barres conductrices,
- chaque extrémité du paquet de tôles comprenant un empilement de tôles alternant entre des tôles isolantes et des tôles de court-circuit,
- l'empilement de tôles de chacune des deux extrémités du paquet de tôles étant mis en oeuvre dans le même ordre selon l'axe central du rotor,
- chaque extrémité du paquet de tôles comprenant autant de groupes de tôles de court-circuit que le rotor comprend de cages d'écureuil,
- deux groupes de tôles de court-circuit adjacents étant décalés angulairement d'un angle égal à l'angle de décalage des cages d'écureuil, et
- les tôles de court-circuit comprenant des lumières, les lumières logeant les anneaux de court-circuit.

Grâce à l'invention, un tel rotor pour un moteur électrique, où les barres conductrices de chaque cage d'écureuil sont à la même distance de l'axe central du rotor, permet que chaque cage d'écureuil présente un même comportement électrique et un même comportement magnétique au vu d'un stator du moteur électrique.

Ainsi, les cages d'écureuil fournissent toutes un couple moteur identique et ne subissent pas ou subissent peu d'harmoniques de courant freinant la rotation du rotor.

De cette manière, un tel rotor est défini par son nombre de cages d'écureuil, le décalage angulaire entre chacune des cages d'écureuil et par le nombre de barres conductrices par cage d'écureuil, ainsi que par l'agencement des cages d'écureuils et des barres conductrices de celles-ci. Le nombre de cages d'écureuil et le nombre de barres conductrices par cage d'écureuil peuvent être variables en fonction de la configuration du moteur électrique.

En outre, un tel rotor, où les anneaux de court-circuit reliant les barres conductrices sont logés dans les lumières des tôles de court-circuit, est plus simple à fabriquer, car les cages d'écureuil peuvent être fabriquées par moulage, par injection d'un matériau électriquement conducteur dans les espaces laissés vides du paquet de tôles.

Par ailleurs, les anneaux de court-circuit étant disposés à l'intérieur des tôles de court-circuit du paquet de tôles, la position des barres conductrices ainsi que la compacité du rotor sont optimisées, améliorant ainsi les performances du rotor.

Selon des aspects avantageux, mais non obligatoires de l'invention, ce rotor incorpore une ou plusieurs des caractéristiques suivantes, prises isolément ou selon toutes combinaisons techniquement admissibles :
- Toutes les barres conductrices de toutes les cages d'écureuil présentent une longueur utile identique.
- Les barres conductrices de chaque cage d'écureuil sont alignées le long de l'axe central du rotor. En outre, les anneaux de court-circuit de l'une des cages d'écureuil sont décalés des anneaux de court-circuit d'une autre des cages d'écureuil, le long de l'axe central du rotor.
- Les barres conductrices de chacune des cages d'écureuil sont obliques par rapport à l'axe central du rotor.
- Le rotor comprend trois cages d'écureuil. Chaque cage d'écureuil comprend quatre barres conductrices. En outre, l'angle de décalage des cages d'écureuil entre elles est égal à 30 degrés.

La présente invention vise, selon un deuxième aspect, un moteur électrique comprenant un rotor, conforme à l'invention et tel que mentionné ci-dessus, et un stator. Le rotor et le stator sont positionnés de manière coaxiale autour d'un axe central du rotor.

Ce moteur électrique présente des caractéristiques et avantages analogues à ceux décrits précédemment en relation avec le rotor selon l'invention.

Selon une caractéristique avantageuse de l'invention, le stator comprend un corps de stator à bobinage dentaire.

La présente invention vise, selon un troisième aspect, un procédé de fabrication d'un rotor, conforme à l'invention et tel que mentionné ci-dessus, comprenant au moins les étapes suivantes :
f) assembler le paquet de tôles par empilage de tôles,
g) injecter un matériau électriquement conducteur dans le paquet de tôles pour former, par moulage, les cages d'écureuil, et
h) mettre en place l'arbre de rotor au travers du perçage central de chacune des tôles du paquet de tôles.

Ce procédé de fabrication présente des caractéristiques et avantages analogues à ceux décrits précédemment en relation avec le rotor selon l'invention.

D'autres particularités et avantages de l'invention apparaîtront encore dans la description ci-après, donnée uniquement à titre d'exemple et faite en référence aux dessins annexés, dans lesquels :
[Fig 1] la figure 1 est une vue schématique en coupe transversale d'une installation comprenant un dispositif d'occultation, de fermeture ou de protection solaire ;
[Fig 2] la figure 2 est une vue schématique en perspective de l'installation illustrée à la figure 1 ;
[Fig 3] la figure 3 est une vue en coupe schématique d'un actionneur électromécanique de l'installation illustrée aux figures 1 et 2, selon un plan de coupe passant par un axe de rotation d'un arbre de sortie de l'actionneur électromécanique, cet actionneur électromécanique comprenant au moins un moteur électrique conforme à l'invention ;
[Fig 4] la figure 4 est une vue schématique en perspective du moteur électrique de l'actionneur électromécanique illustré à la figure 3 ;
[Fig 5] la figure 5 est une vue schématique en perspective du moteur électrique illustré à la figure 4, sur laquelle certains éléments du moteur électrique sont omis, la figure 5 n'appartenant pas à l'invention ;
[Fig 6] la figure 6 est une vue schématique en perspective d'un rotor conforme à un premier mode de réalisation et appartenant au moteur électrique illustré aux figures 3 à 5, le premier mode de réalisation n'appartenant pas à l'invention ;
[Fig 7] la figure 7 est une vue schématique en perspective de trois cages d'écureuil imbriquées entre elles du rotor illustré à la figure 6 ;
[Fig 8] la figure 8 est une vue schématique en perspective de l'une des cages d'écureuil illustrées à la figure 7 ;
[Fig 9] la figure 9 est une vue schématique d'une tôle magnétique du rotor illustré à la figure 6 ;
[Fig 10] la figure 10 est une vue schématique en perspective d'un stator du moteur électrique illustré aux figures 3 à 5 ;
[Fig 11] la figure 11 est une vue analogue à la figure 7 dans le cas d'un rotor selon un deuxième mode de réalisation, ce rotor comprenant seulement deux cages d'écureuil, le deuxième mode de réalisation n'appartenant pas à l'invention ;
[Fig 12] la figure 12 est une vue analogue à la figure 6 dans le cas d'un rotor selon un troisième mode de réalisation de l'invention ;
[Fig 13] la figure 13 est une vue schématique en perspective et éclatée d'un paquet de tôles du rotor illustré à la figure 12 ;
[Fig 14] la figure 14 est une vue schématique de trois types de tôles du paquet de tôles illustré à la figure 13 ; et
[Fig 15] la figure 15 est une vue schématique en perspective de trois cages d'écureuil imbriquées entre elles du rotor illustré à la figure 12.

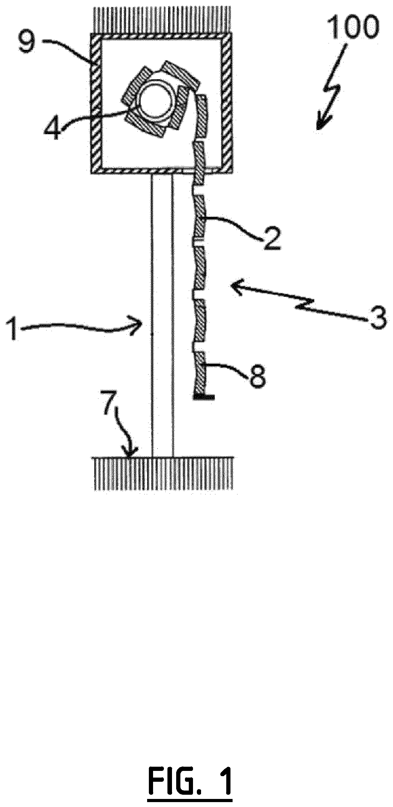

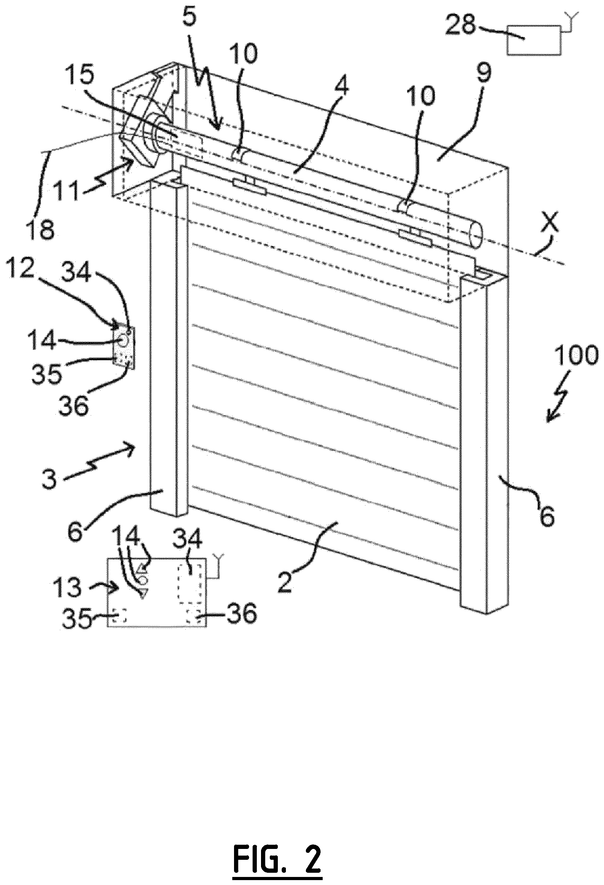

On décrit tout d'abord, en référence aux figures 1 et 2, une installation 100, comprenant un dispositif de fermeture, d'occultation ou de protection solaire 3 installée dans un bâtiment comportant une ouverture 1, fenêtre ou porte. Cette installation 100 est équipée d'un écran 2 appartenant au dispositif de fermeture, d'occultation ou de protection solaire 3, en particulier un volet roulant motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un volet roulant, un store en toile ou avec des lames orientables, un portail roulant, une grille, une porte ou encore un volet battant. La présente invention s'applique à tous les types de dispositif d'occultation.

Ici, l'installation 100 comprend le dispositif d'occultation 3.

On décrit, en référence aux figures 1 à 3, un volet roulant conforme à l'invention.

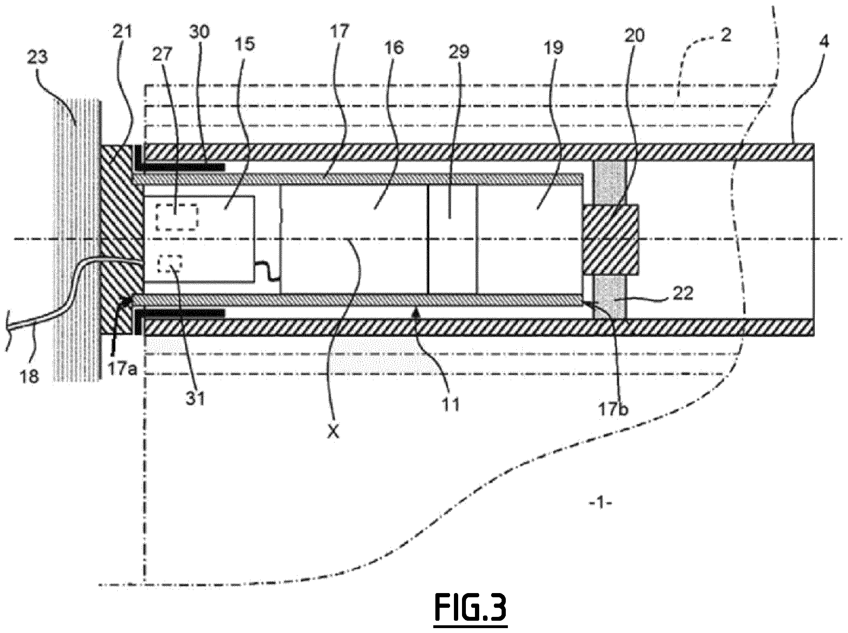

Le dispositif d'occultation 3 comprend un dispositif d'entraînement motorisé 5. Le dispositif d'entraînement motorisé 5 comprend un actionneur électromécanique 11 plus particulièrement illustré à la figure 3.

Avantageusement, le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée première position de fin de course ou position de fin de course haute FdcH, et une position fermée, correspondant à la position déroulée et pouvant également être appelée deuxième position de fin de course ou position de fin de course basse FdcB.

Ainsi, l'actionneur électromécanique 11 est configuré pour entraîner, autrement dit entraîne, en déplacement l'écran 2, entre la première position de fin de course FdCH et la deuxième position de fin de course FdCB.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation 6 comprend soit l'unité de commande locale 12, soit l'unité de commande centrale 13, soit l'unité de commande locale 12 et l'unité de commande centrale 13.

On décrit à présent, plus en détail et en référence à la figure 3, l'actionneur électromécanique 11 appartenant à l'installation 100 des figures 1 et 2.

L'actionneur électromécanique 11 comprend un moteur électrique 16.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou centrale 13. L'unité de commande locale 12 et/ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

L'unité de commande locale 12 et/ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur du bâtiment ou sur une face d'un cadre dormant d'une fenêtre ou d'une porte. Un point de commande nomade peut être une télécommande, un téléphone intelligent ou une tablette.

Avantageusement, l'unité de commande locale 12 et/ou centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur et/ou à un signal provenant d'une horloge de l'unité électronique de contrôle 15, en particulier du microcontrôleur 31. Le capteur et/ou l'horloge peuvent être intégrés à l'unité de commande locale 12 ou à l'unité de commande centrale 13.

Avantageusement, l'actionneur électromécanique 11 comprend un carter 17, en particulier tubulaire. Le moteur électrique 16 est monté à l'intérieur du carter 17, en particulier dans une configuration assemblée de l'actionneur électromécanique 11.

Ici, le carter 17 de l'actionneur électromécanique 11 est de forme cylindrique, notamment de révolution autour de l'axe de rotation X.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, un arbre de sortie 20.

Avantageusement, l'actionneur électromécanique 11 comprend, en outre, un réducteur 19.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Le frein 29 est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Ici et comme visible à la figure 3, dans la configuration assemblée de l'actionneur électromécanique 11, le frein 29 est configuré pour être disposé, autrement dit est disposé, entre le moteur électrique 16 et le réducteur 19, c'est-à-dire à la sortie du moteur électrique 16.

En variante, non représentée, dans la configuration assemblée de l'actionneur électromécanique 11, le frein 29 est configuré pour être disposé, autrement dit est disposé, entre l'unité électronique de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, le réducteur 19 et, éventuellement, le frein 29 sont disposés à l'intérieur du carter 17 de l'actionneur électromécanique 11, dans la configuration assemblée de l'actionneur électromécanique 11.

L'unité électronique de contrôle 15 de l'actionneur électromécanique 11 comprend un dispositif de détection d'obstacle et de fins de course, non représenté, lors de l'enroulement de l'écran 2 et lors du déroulement de cet écran 2.

Le dispositif de détection d'obstacle et de fins de course lors de l'enroulement et lors du déroulement de l'écran 2 est mis en oeuvre au moyen du microcontrôleur 31 de l'unité électronique de contrôle 15 et, en particulier, au moyen d'un algorithme mis en oeuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne 30 insérée autour d'une première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend, en outre, un support de couple 21, pouvant également être appelé « tête d'actionneur ». Le support de couple 21 est disposé au niveau de la première extrémité 17a du carter 17 de l'actionneur électromécanique 11, dans la configuration assemblée de l'actionneur électromécanique 11.

Le support de couple 21 permet d'assurer la reprise des efforts exercés par l'actionneur électromécanique 11, en particulier le couple exercé par l'actionneur électromécanique 11, par la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Ainsi, le support de couple 21 de l'actionneur électromécanique 11 permet de fixer l'actionneur électromécanique 11 sur un bâti 23, en particulier à une joue du coffre 9.

Avantageusement, le support de couple 21 est en saillie au niveau de la première extrémité 17a du carter 17 de l'actionneur électromécanique 11, en particulier l'extrémité 17a du carter 17 recevant la couronne 30. La couronne 30 constitue, autrement dit est configurée pour constituer, un palier de guidage en rotation du tube d'enroulement 4, dans une configuration assemblée du dispositif d'occultation 3.

Avantageusement, le support de couple 21 de l'actionneur électromécanique 11 peut également permettre d'obturer la première extrémité 17a du carter 17.

Par ailleurs, le support de couple 21 de l'actionneur électromécanique 11 peut permettre de supporter au moins une partie de l'unité électronique de contrôle 15.

Avantageusement, l'unité électronique de contrôle 15 peut être alimentée en énergie électrique au moyen d'un câble d'alimentation électrique 18.

Ici et tel qu'illustré à la figure 3, l'unité électronique de contrôle 15 est ainsi disposée, autrement dit intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le coffre 9 ou dans le support de couple 21.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, pouvant être, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison 22. Cet élément de liaison 22 est relié au tube d'enroulement 4, dans la configuration assemblée du dispositif d'occultation 3. L'élément de liaison 22 est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

Avantageusement, l'actionneur électromécanique 11 comprend, en outre, un câble d'alimentation électrique 18, permettant son alimentation en énergie électrique, notamment l'alimentation électrique de l'unité électronique de contrôle 15 et l'alimentation électrique du moteur électrique 16, en particulier à partir d'un réseau d'alimentation en énergie électrique du secteur.

Ici et comme illustré à la figure 2, l'unité électronique de contrôle 15 comprend une seule carte électronique. En outre, la carte électronique est configurée pour contrôler le moteur électrique 16 et, éventuellement, accéder à des fonctions de paramétrage et/ou de configuration de l'actionneur électromécanique 11, au moyen d'éléments de sélection et, éventuellement, d'affichage, non représentés.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour accéder à des fonctions de paramétrage et/ou de configuration de l'actionneur électromécanique 11, au moyen d'éléments de sélection et, éventuellement, d'affichage, non représentés. Dans le cas où l'unité électronique de contrôle 15 comprend une première carte électronique et une deuxième carte électronique, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre une partie du support de couple 21 et le couvercle.

Ici, le moteur électrique 16 est de type asynchrone.

Le moteur électrique 16 comprend un rotor 200 et un stator 300 positionnés de manière coaxiale autour de l'axe de rotation X du tube d'enroulement 4 en configuration montée du dispositif d'entraînement motorisé 5.

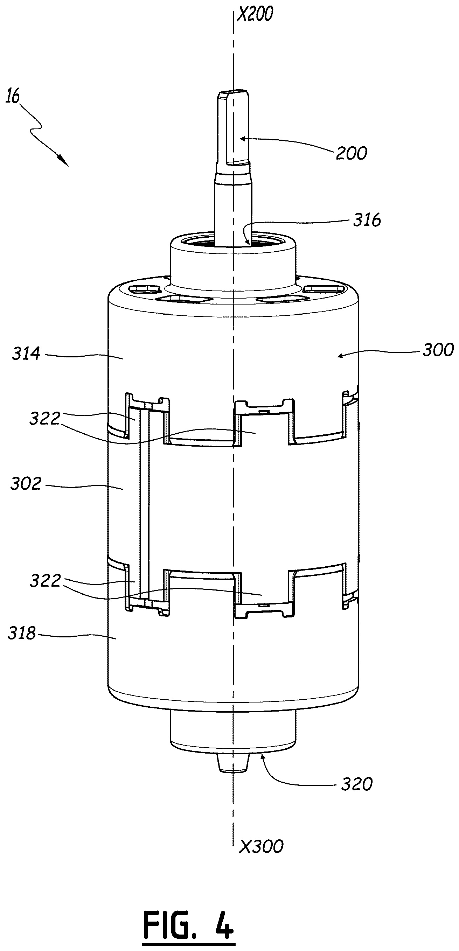

On décrit à présent, plus en détail et en référence aux figures 4 à 10, le moteur électrique 16 de l'actionneur électromécanique 11 de la figure 3.

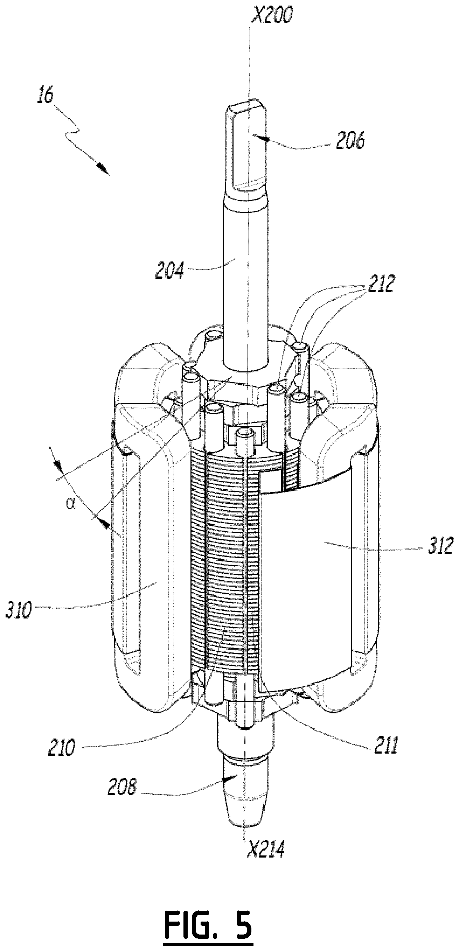

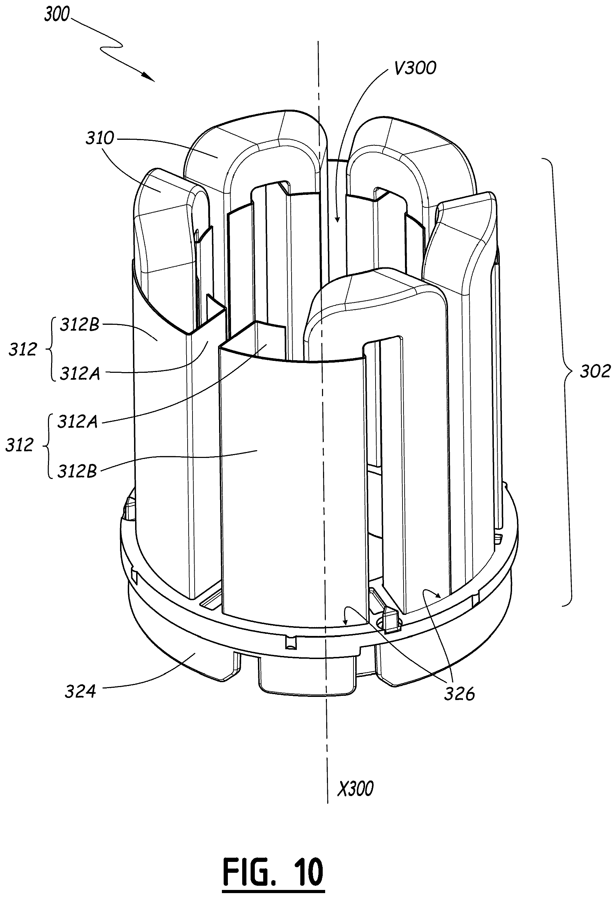

Sur les figures 5 et 10, une partie du moteur électrique 16, en particulier du stator 300, est masquée, pour plus de visibilité.

Le rotor 200 comprend un corps de rotor 202 et un arbre de rotor 204. On note X200 un axe central du rotor 200 qui est confondu avec l'axe de rotation X en configuration montée du moteur électrique dans l'installation 100.

Dans l'exemple de réalisation illustré aux figures 4 à 10, l'arbre de rotor 204 peut également être appelé « arbre moteur ».

Avantageusement, l'arbre de rotor 204 dépasse de part et d'autre du corps de rotor 202.

Ainsi, l'arbre de rotor 204 comprend une première extrémité 206 et une deuxième extrémité 208, en saillie par rapport au corps de rotor 202.

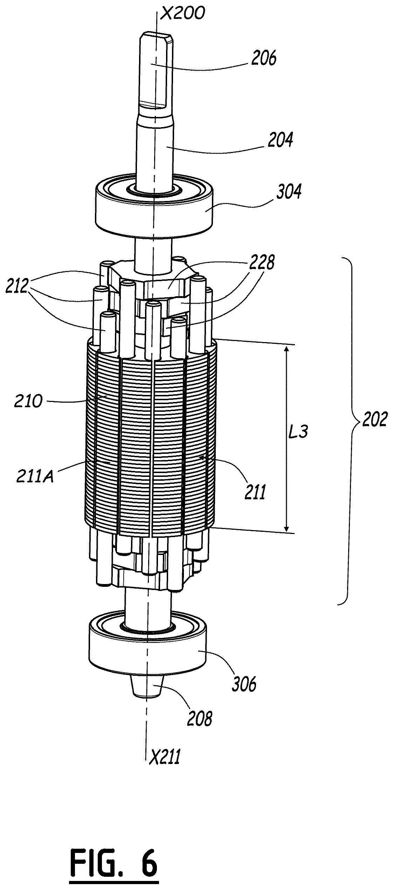

Ici et comme illustré aux figures 5 et 6, le corps de rotor 202 comprend une multitude de tôles 210, qui forment ensemble un empilement de tôles 211, également appelé « paquet de tôles ». Les tôles 210 du paquet de tôles 211 sont fixées entre elles par des éléments de maintien, non représentés, pouvant être, par exemple, des agrafes.

Ce paquet de tôles 211 est de forme cylindrique et est centré sur un axe principal X211, confondu avec l'axe central X200 du rotor 200, en particulier dans une configuration assemblée du rotor 200.

Le rotor 200 comprend, en outre, des barres conductrices 212. Les barres conductrices 212 sont réparties régulièrement à la périphérie du corps de rotor 202, c'est-à-dire à l'intérieur de l'empilage de tôles 210 formant le paquet de tôles 211.

Le matériau électriquement conducteur formant les barres conductrices 212 est, par exemple, du cuivre ou de l'aluminium.

Ici et comme illustré aux figures 5 à 8, les barres conductrices 212 sont de forme cylindrique à section circulaire et s'étendent parallèlement à l'axe central X200 du rotor 200.

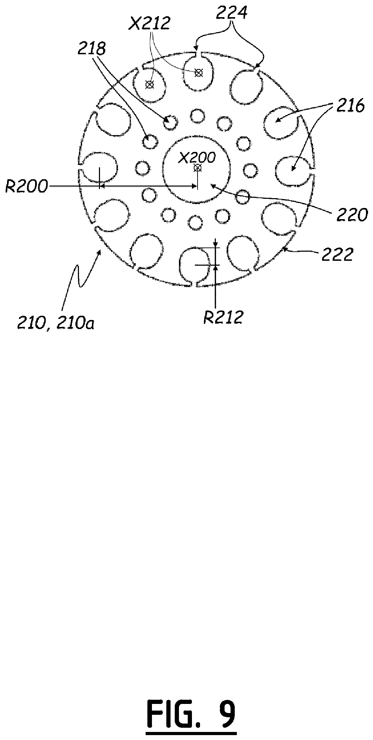

Les barres conductrices 212 sont toutes équidistantes de l'axe central X200, c'est-à-dire que leurs axes longitudinaux respectifs X212 sont tous disposés sur la surface d'un même cylindre à section circulaire centré sur l'axe central X200 et dont on note R200 le rayon. La distance entre l'axe central X200 et une barre conductrice 212 est égale au rayon R200 diminué du rayon R212 de cette barre conductrice 212. Comme cela ressort de la figure 9, les rayons R200 et R212 peuvent se déduire de la géométrie des tôles 210 qui entourent les barres conductrices 212.

Les barres conductrices 212 sont régulièrement disposées dans le corps de rotor 202 autour de l'axe central X200 avec un décalage angulaire α entre deux barres conductrices 212 adjacentes.

Ici, le corps de rotor 202 comprend douze barres conductrices 212. Le décalage angulaire α entre deux barres conductrices 212 adjacentes, qui est égal au décalage angulaire de leurs axes X212 respectifs autour de l'axe central X200, est alors égal à 30 degrés.

En pratique, le décalage angulaire α est égal au résultat de la division de 360 degrés par le nombre de barres conductrices 212, douze dans l'exemple.

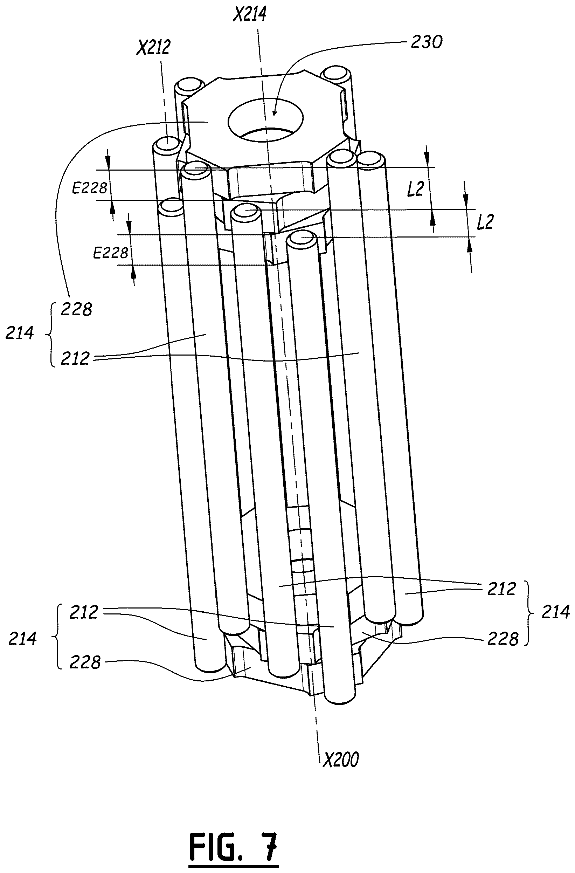

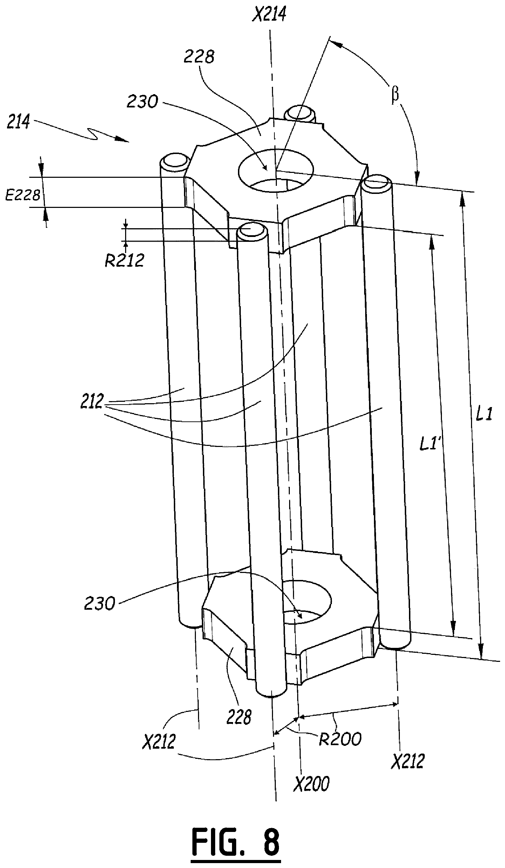

Les barres conductrices 212 sont regroupées en au moins deux groupes au sein desquels les barres conductrices 212 sont reliées électriquement entre elles. Un tel groupe de plusieurs barres conductrices 212 est appelé une « cage d'écureuil » et référencé « 214 ». Une cage d'écureuil 214 est visible seule à la figure 8. Les trois cages d'écureuil 214 du rotor 200 du premier mode de réalisation, qui n'appartient pas à l'invention, sont visibles, en configuration imbriquée, à la figure 7.

Ainsi, le rotor 200 comprend au moins deux cages d'écureuil 214. De préférence, le rotor 200 comprend un nombre impair de cages d'écureuil 214, comme dans le cas du premier mode de réalisation, qui n'appartient pas à l'invention, où le rotor 200 comprend trois cages d'écureuil 214 regroupant chacune quatre barres conductrices 212.

En pratique, le nombre de cages d'écureuil 214 et le nombre de barres conductrices 212 que comprend chaque cage d'écureuil 214 sont adaptés en fonction de la nature de l'alimentation du moteur électrique 16 et en fonction du couple de sortie souhaité.

Chaque cage d'écureuil 214 s'étend le long d'un axe longitudinal X214, confondu avec l'axe central X200, en particulier dans la configuration assemblée du rotor 200. En particulier, les axes longitudinaux X214 des cages d'écureuil 214 d'un rotor 200 sont confondus. Les cages d'écureuil 214 sont donc coaxiales avec l'arbre de rotor 204.

Les barres conductrices 212 d'une même cage d'écureuil 214 sont alignées le long de son axe longitudinal X214. Les barres conductrices 212 sont donc disposées au même niveau le long de l'axe central X200 du rotor 200.

Une cage d'écureuil 214 regroupe au moins deux barres conductrices 212.

Avantageusement, deux barres conductrices 212 du rotor 200, adjacentes selon une direction circonférentielle par rapport à l'axe central X200, appartiennent toujours à deux cages d'écureuil 214 différentes.

Une cage d'écureuil 214 comprend, en outre, deux anneaux de court-circuit 228.

Ici, les anneaux de court-circuit 228 sont globalement plans et perpendiculaires à l'axe X214.

Les anneaux de court-circuit 228 sont fixés et raccordés électriquement aux barres conductrices 212, en particulier au niveau de leurs extrémités, et sont réalisés dans la même matière électriquement conductrice.

Ainsi, toutes les barres conductrices 212 d'une même cage d'écureuil 214 sont reliées électriquement par l'intermédiaire des anneaux de court-circuit 228 et forment ensemble un circuit électrique continu et indépendant.

Ici, chaque anneau de court-circuit 228 est de forme extérieure carrée et comprend des coins tronqués au niveau desquels sont fixées et raccordées les barres conductrices 212.

Chaque anneau de court-circuit 228 comprend, en outre, un perçage central 230. Le perçage central 230 de chaque anneau de court-circuit 228 est configuré pour loger, autrement dit loge, l'arbre de rotor 204, en particulier dans la configuration assemblée du rotor 200.

Ici, les barres conductrices 212 et les anneaux de court-circuit 228 appartenant à une même cage d'écureuil 214 sont décalés des barres conductrices 212 et des anneaux de court-circuit 228 d'une autre cage d'écureuil 214 le long de l'axe central X200, comme cela ressort, notamment, de la figure 7.

En outre, les cages d'écureuil 214 ne sont pas en contact entre elles et ne sont donc pas reliées électriquement entre elles.

Ainsi, chaque cage d'écureuil 214 forme un circuit électrique continu et isolé des autres cages d'écureuil 214, c'est-à-dire indépendant d'un point de vue électrique.

Le rotor 200 comprend donc autant de circuits électriques indépendants que de cages d'écureuil 214, soit trois circuits électriques indépendants dans l'exemple représenté aux figures 4 à 10.

Le matériau électriquement conducteur formant les anneaux de court-circuit 228 est, par exemple, du cuivre ou de l'aluminium.

Les barres conductrices 212 appartiennent alternativement à une première, à une deuxième ou à une troisième cage d'écureuil 214.

Ainsi, les barres conductrices 212 d'une même cage d'écureuil 214 sont décalées, autour de l'axe X214, d'un angle β, qui est en pratique égal au résultat de la division de 360 degrés par le nombre de barres conductrices 212 de cette cage d'écureuil 214. Dans l'exemple, l'angle β est donc égal à 90 degrés. L'angle β est, en pratique, défini par la géométrie des anneaux de court-circuit 228.

Avantageusement, les tôles 210 ont globalement une forme de disque plan et sont disposées perpendiculairement à l'axe central X200 du rotor 200.

Chaque tôle 210 comprend un perçage central 220 et des perçages périphériques 216.

Avantageusement, chaque tôle 210 comprend, en outre, un bord extérieur 222, le bord extérieur 212 définissant une forme de chaque tôle 210, en particulier en forme de disque.

Les perçages périphériques 216 de l'ensemble des tôles 210 du paquet de tôles 211 sont alignés et permettent le passage des barres conductrices 212 dans le corps de rotor 202.

Ainsi, chaque tôle 210 comprend autant de perçages périphériques 216 que le rotor 200 comprend de barres conductrices 212.

Ici et comme illustré à la figure 9, chaque tôle 210 comprend donc douze perçages périphériques 216.

Avantageusement, chaque tôle 210 comprend, en outre, des bossages 218. En outre, les bossages 218 sont des éléments d'indexation, de sorte à empiler plusieurs tôles 210 sans mouvement angulaire entre elles autour de l'axe central X200.

En pratique, chaque bossage 218 forme un creux sur une première face d'une tôle 210 et forme une bosse sur une deuxième face de cette tôle 210. En outre, lorsque deux tôles 210 sont empilées, les bosses des bossages 218 d'une première tôle 210 sont reçus dans les creux des bossages 218 d'une deuxième tôle 210.

Ainsi, les bossages 218 empêchent la rotation d'une tôle 210 par rapport à une autre tôle 210 et facilitent leur empilement.

Les perçages centraux 220 de l'ensemble des tôles 210 du paquet de tôles 211 sont tous coaxiaux et alignés, de même diamètre et permettent le passage de l'arbre de rotor 204 dans le corps de rotor 202.

Dans l'exemple de réalisation des figures 4 à 10, les tôles 210 sont toutes identiques et sont notées « 210a ».

Les tôles 210a sont des tôles dites « magnétiques ». Ces tôles 210a peuvent être isolées électriquement entre elles, puisque le courant circule dans les barres conductrices 212.

Avantageusement, chaque tôle 210a comprend, en outre, des encoches 224. En outre, chacun des perçages périphériques 216 débouche sur le bord extérieur 222 de chaque tôle 210a par l'intermédiaire des encoches 224. Ces tôles 210a sont donc dites « à encoches ».

Chaque barre conductrice 212 d'une cage d'écureuil 214 est reliée aux autres barres conductrices 212 appartenant à la même cage d'écureuil 214 par les deux anneaux de court-circuit 228 appartenant également à cette même cage d'écureuil 214.

Ainsi, toutes les barres conductrices 212 d'une même cage d'écureuil 214 sont reliées entre elles par les anneaux de court-circuit 228.

Avantageusement, les anneaux de court-circuit 228 sont disposés au niveau des extrémités des barres conductrices 212.

Ainsi, lorsque l'arbre de rotor 204 est monté au travers du paquet de tôles 211, chaque cage d'écureuil 214 comprend un premier anneau de court-circuit 228 disposé du côté de la première extrémité 206 de l'arbre de rotor 204 et un deuxième anneau de court-circuit 228 disposé du côté de la deuxième extrémité 208 de l'arbre de rotor 204.

Ici et comme illustré à la figure 6, le paquet de tôles 211 est disposé entre deux anneaux de court-circuit 228.

Ainsi, le paquet de tôles 211 correspond à un noyau de rotor, noté 211A, qui est en pratique la partie magnétique ou magnétisée du rotor 200 et permet l'application d'un couple autour de l'axe X200, donc la rotation du rotor 200 dans le stator 300.

Avantageusement, les barres conductrices 212 de toutes les cages d'écureuil 214 sont toutes de même longueur L1, mesurée parallèlement à l'axe X214.

Avantageusement, une longueur L1', mesurée parallèlement à l'axe X214, entre les premier et deuxième anneaux de court-circuit 228 d'une même cage d'écureuil 214 est identique pour chacune des cages d'écureuil 214.

Ici, les trois cages d'écureuil 214 sont identiques.

Avantageusement, les cages d'écureuil 214 sont décalées les unes des autres d'une longueur L2, mesurée parallèlement à l'axe central X200. En pratique, cette longueur L2 est supérieure à une épaisseur E228 d'un anneau de court-circuit 228.

Les barres conductrices 212 étant disposées dans les perçages périphériques 216 des tôles magnétiques 210a, on comprend que tous les perçages périphériques 216 d'une même tôle magnétique 210a sont décalés angulairement de l'angle α, soit 30 degrés dans l'exemple illustré aux figures 4 à 10.

En outre, puisque deux barres conductrices 212 adjacentes appartiennent à deux cages d'écureuil 214 différentes et que toutes les cages d'écureuil 214 sont identiques, on comprend que les cages d'écureuil 214 sont angulairement décalées entre elles d'un angle égal à α.

Ici et comme représenté aux figures 6 et 8, les trois cages d'écureuil 214 du rotor 200 sont imbriquées, autrement dit entremêlées, c'est-à-dire que pour chaque cage d'écureuil 214, au moins l'un des anneaux de court-circuit 228 est disposé entre les barres conductrices 212 d'une autre cage d'écureuil 214.

Ici et comme illustré à la figure 6, une partie seulement de chaque barre conductrice 212 traverse le paquet de tôles 211, c'est-à-dire le noyau de rotor 211A, et les deux extrémités de chaque barre conductrice 212 s'étendent de part et d'autre du paquet de tôles 211. En pratique, cette partie des barres conductrices 212 disposée dans le paquet de tôles 211 correspond à la partie utile de chaque barre conductrice 212.

Les parties utiles de toutes les barres conductrices 212 ont toutes une longueur identique, notée L3.

Le stator 300 a un axe central X300, confondu avec l'axe X200, en particulier dans une configuration assemblée du moteur électrique 16.

Ici, le stator 300 comprend un corps de stator 302, visible à la figure 4, et centré sur l'axe X300.

Ici, le stator 300 comprend un espace interne V300, en particulier cylindrique à section circulaire, visible à la figure 10. Le rotor 200 est configuré pour être positionné, autrement dit est positionné, à l'intérieur de l'espace interne V300 du stator 300, en particulier dans la configuration assemblée du moteur électrique 16. En outre, le rotor 200 est configuré pour être entraîné en rotation, autrement dit est entraîné en rotation, à l'intérieur de l'espace interne V300, lorsque le moteur électrique 16 est activé électriquement.

Avantageusement, le diamètre de l'espace interne V300 est tel que celui-ci reçoit le rotor 200, en particulier dans la configuration assemblée du moteur électrique 16.

Ici, étant donné qu'une partie magnétique ou magnétisée du rotor 200, c'est-à-dire le noyau de rotor 211A et la partie utile des barres conductrices 212, se trouve à l'intérieur de l'espace interne V300 du stator 300, le rotor 200 est qualifié de rotor interne.

Avantageusement, le moteur électrique 16 comprend, en outre, un premier palier 304 et un deuxième palier 306. En outre, les premier et deuxième paliers 304, 306 sont configurés pour supporter en rotation, autrement dit supportent en rotation, l'arbre de rotor 204, en particulier dans la configuration assemblée du moteur électrique 16.

Ainsi, le rotor 200 est monté dans le corps de stator 302 en étant mobile en rotation autour de l'axe de rotation X et supporté au niveau des première et deuxième extrémités 206, 208 de l'arbre de rotor 204 par l'intermédiaire des premier et deuxième paliers 304, 306.

Ici, la première extrémité 206 de l'arbre de rotor 204 est supportée par le premier palier 304. En outre, la deuxième extrémité 208 de l'arbre de rotor 204 est supportée par le deuxième palier 306.

Ainsi, les premier et deuxième paliers 304, 306 sont positionnés de part et d'autre du corps de stator 302 suivant l'axe de rotation X.

Le stator 300 comprend, en outre, des bobines 310.

Dans l'exemple illustré aux figures 4 à 10, le stator 300 comprend six bobines 310, dont une est omise aux figures 5 et 10 pour faciliter la lecture de ces figures.

Avantageusement, le stator 300 comprend, en outre, des éléments d'isolation 312, dont un est omis aux figures 5 et 10 pour faciliter la lecture de celles-ci. En outre, les éléments d'isolation 312 sont disposés entre les bobines 310 et le corps de stator 302, en particulier dans la configuration assemblée du moteur électrique 16.

Ici et comme illustré aux figures 5 et 10, le stator 300 comprend autant d'éléments d'isolation 312 que de bobines 310.

Avantageusement, les éléments d'isolation 312 ont une section perpendiculaire à l'axe X300 en forme de « C », c'est-à-dire qu'ils forment deux crochets 312A, ou deux parois latérales, en regard l'un de l'autre. Ces parois latérales 312A s'étendent en direction de l'axe X300 par rapport à un fond 312B de chaque élément d'isolation 312.

Avantageusement, chaque bobine 310 est maintenue entre deux parois latérales adjacentes 312A de deux éléments d'isolation 312 adjacents.

Avantageusement, le moteur électrique 16 comprend, en outre, un premier bol 314 et un deuxième bol 318.

Avantageusement, le premier bol 314 comprend un premier logement annulaire 316. Le deuxième bol 318 comprend un deuxième logement annulaire 320. En outre, en particulier dans la configuration assemblée du moteur électrique 16, le premier palier 304 est configuré pour être disposé, autrement dit est disposé, à l'intérieur du premier logement annulaire 316 et le deuxième palier 306 est configuré pour être disposé, autrement dit est disposé, à l'intérieur du deuxième logement annulaire 320.

Avantageusement, chacun des premier et deuxième bols 314, 316 est assemblé avec le corps de stator 302, en particulier au moyen d'éléments de fixation 322, par exemple par encliquetage élastique, ou encore par soudage.

En variante, non représentée, les premier et deuxième logements annulaires 316, 320 peuvent être ménagés dans le corps de stator 302.

Avantageusement, le stator 300 comprend, en outre, deux flasques 324, dont un seul est représenté à la figure 10. En outre, chaque flasque 324 est disposé à l'une des extrémités du corps de stator 302.

Avantageusement, chaque flasque 324 est configuré pour être disposé, autrement dit est disposé, entre le corps de stator 302 et l'un des premier et deuxième bols 314, 316, en particulier dans la configuration assemblée du moteur électrique 16.

Avantageusement, chaque flasque 324 comprend des logements 326. En outre, chaque logement 326 est configuré pour recevoir, autrement dit reçoit, une partie des éléments d'isolation 312 et des bobines 310, en particulier dans la configuration assemblée du moteur électrique 16.

Ainsi, les logements 326 permettent de maintenir en position les éléments d'isolation 312 et les bobines 310 par rapport au corps de stator 302.

Ici et comme illustré à la figure 10, chaque flasque 324 comprend autant de logements 326 que d'éléments d'isolation 312, en l'occurrence six logements 326.

Les bobines 310 sont configurées pour générer, autrement dit génèrent, un champ magnétique lorsqu'elles sont alimentées par un courant électrique.

Le champ magnétique au niveau du stator 300 induit des courants dans les barres conductrices 212 du rotor 200 qui à son tour génère un champ magnétique dans le rotor 200. Puis, l'interaction des deux champs magnétiques, du stator 300 et du rotor 200, entraîne en rotation le rotor 200 par rapport au stator 300.

Ce champ magnétique est tournant, étant donné que l'unité électronique de contrôle 15 alimente en énergie électrique alternativement les bobines 310.

Avantageusement, le moteur électrique 16 est alimenté en courant alternatif triphasé ou en courant alternatif monophasé.

Avantageusement, le corps de stator 302 comprend, en outre, des dents, non représentées.

Ici, le bobinage du stator 300, autrement dit du corps de stator 302, est dit « dentaire », car chaque bobine 310 est enroulée autour d'une des dents du corps de stator 302.

Ce type de bobinage est plus avantageux que d'autres types de bobinage couramment utilisés, tels que, par exemple, le bobinage par insertion, car sa mise en oeuvre est plus rapide est moins coûteuse.

Un tel bobinage dentaire génère un courant principal, dit « courant moteur », dans le rotor 200, ainsi que des harmoniques principales de courant, dites « harmoniques moteurs ». Le courant principal et les harmoniques principales de courant sont moteurs, car ils génèrent un couple dans le rotor 200, de sorte à entraîner en rotation celui-ci dans le même sens que le sens de rotation du champ électromagnétique.

Il est connu qu'en temps normal, un tel bobinage dentaire génère des harmoniques secondaires, dites « harmoniques d'espace ». Ces harmoniques secondaires ne génèrent pas de couple entraînant le rotor 200 en rotation dans son sens de fonctionnement et peuvent générer un couple s'opposant à la rotation de celui-ci. Ceci conduit à freiner le rotor 200 et donc à réduire la performance du moteur électrique 16.

La présence de plusieurs cages d'écureuil 214 dans le rotor 200 permet de réduire, voire de supprimer, l'effet de freinage des harmoniques secondaires engendrées par le bobinage dentaire.

Les harmoniques secondaires sont captées par les cages d'écureuil 214 mais la structure du rotor 200, à savoir le nombre de cages d'écureuil 214 et la disposition des barres conductrices 212, ne permet pas le développement de courants induits dans les barres conductrices 212 et, par conséquent, ne créent pas de couple de freinage.

Ainsi, on peut dire que l'une des harmoniques secondaires est filtrée par les cages d'écureuils 214. La disposition angulaire des barres conductrices 212 d'une même cage d'écureuil 214 permet d'éviter la création d'un courant induit de l'harmonique secondaire visée.

Les barres conductrices 212 captent donc le courant principal et les premières harmoniques provenant du bobinage. Ceci permet de générer un couple moteur entraînant le rotor 200 en rotation. Puisque les barres conductrices 212 sont toutes équidistantes de l'axe central X200, donc de l'axe de rotation X, les cages d'écureuil 214 captent toutes un courant identique et génèrent donc toutes un couple moteur identique. Ceci est avantageux, car le moteur électrique 16 est alors plus performant et son rendement est amélioré.

En outre, le fait que les barres conductrices 212 de toutes les cages d'écureuil 214 aient toutes une longueur utile identique, égale à L3, est avantageux, car cela permet également que chaque cage d'écureuil 214 génère un couple moteur identique aux autres cages d'écureuil 214.

De cette manière, une répartition équivalente du courant dans les barres conductrices 212 est obtenue et donc un couple uniforme, en particulier sans balourd magnétique.

Par ailleurs, les encoches 224 ménagées sur les tôles 210a favorisent la circulation du champ électromagnétique à l'intérieur du rotor 200. Ceci permet d'augmenter la performance du moteur électrique 16.

On décrit à présent un mode d'exécution d'un procédé de fabrication du rotor 200, illustré aux figures 4 à 10, pour le moteur électrique 16.

Le procédé de fabrication comprend une première étape d'assemblage du paquet de tôles 211 par empilage des tôles magnétiques 210a.

Avantageusement, les tôles magnétiques 210a peuvent être maintenues assemblées ensemble, par exemple, par agrafage et/ou par soudage. Le maintien des tôles magnétiques 210a par agrafage consiste en une déformation de celles-ci, au moyen de protrusions de maintien tels que, par exemple, les bossages 218. Le maintien des tôles magnétiques 210a ensemble formant le paquet de tôles 211 peut être mis en oeuvre en comprimant celles-ci, en particulier au moyen d'une presse. Une hauteur prédéterminée du paquet de tôles 211 peut ainsi être obtenue en définissant le nombre de tôles magnétiques 210a.

Le procédé de fabrication comprend, en outre, une deuxième étape d'insertion des barres conductrices 212 au travers du paquet de tôles 211 et, plus particulièrement, au travers des perçages périphériques 216 des tôles magnétiques 210a.

Le procédé de fabrication comprend, en outre, une troisième étape de positionnement des anneaux de court-circuit 228 entre les barres conductrices 212.

Ici, la troisième étape consiste à empiler les anneaux de court-circuit 228 sur le paquet de tôles 211.

Avantageusement, la troisième étape est mise en oeuvre en disposant entre chaque anneau de court-circuit 228 un matériau, non représenté, de sorte à garantir que les anneaux de court-circuit 228 ne sont pas en contact entre eux.

Ce matériau peut être, par exemple, une couche de polymère isolante. Ce matériau peut être réalisé sous la forme d'une entretoise. Ce matériau peut être soit laissé en position entre les anneaux de court-circuit 228, soit retiré à la fin du procédé de fabrication.

Avantageusement, au cours de la troisième étape, les anneaux de court-circuit 228 sont orientés, de sorte à ce que chaque anneau de court-circuit 228 soit en contact avec les barres conductrices 212, en particulier au niveau de l'une de leurs extrémités, d'une même cage d'écureuil 214, selon la configuration visible à la figure 7.

Le procédé de fabrication comprend, en outre, une quatrième étape d'assemblage des anneaux de court-circuit 228 avec les barres conductrices 212 d'une même cage d'écureuil 214.

Ici, la quatrième étape consiste à souder ou à braser chaque anneau de court-circuit 228 aux barres conductrices 212, avec lesquelles celui-ci est en contact, de sorte à former les cages d'écureuil 214. En outre, les deux extrémités d'une même barre conductrice 212 sont soudées ou brasées à deux anneaux de court-circuit 228 distincts.

L'enchaînement des deuxième, troisième et quatrième étapes permet d'obtenir des cages d'écureuil 214 imbriquées et indépendantes d'un point de vue électrique.

Le procédé de fabrication comprend, en outre, une cinquième étape de mise en place de l'arbre de rotor 204 au travers du perçage central 220 de chacune des tôles magnétiques 210a du paquet de tôles 211.

Ici, la cinquième étape consiste à insérer l'arbre de rotor 204 dans le corps de rotor 202 au travers des perçages centraux 220 des tôles magnétiques 210a et au travers des perçages centraux 230 des anneaux de court-circuit 228. L'arbre de rotor 204 est ensuite maintenu solidairement du corps de rotor 202, notamment parce que l'arbre de rotor 204 est monté serré par rapport au corps de rotor 202.

L'ordre des étapes du précédé de fabrication du rotor 200 peut être différent de l'ordre décrit ci-dessus.

En particulier, la cinquième étape consistant à insérer l'arbre de rotor 204 dans le corps de rotor 202 peut être mis en oeuvre avant la deuxième étape d'insertion des barres conductrices 212 au travers du paquet de tôles 211.

On décrit à présent un mode d'exécution d'un procédé de fabrication du bobinage dentaire du stator 300, illustré aux figures 5 et 10, pour le moteur électrique 16.

Le procédé de fabrication comprend une première étape de mise en place des éléments d'isolation 312 dans des encoches, non représentées, du corps de stator 302.

Les éléments d'encoches 312 sont obtenus par pliage d'une feuille d'isolant, pouvant être, par exemple, du mica, notamment en forme de « U », c'est-à-dire comprenant la base 312B et les deux parois latérales 312A s'étendant à partir de cette base 312B.

Le procédé de fabrication comprend, en outre, une deuxième étape de bobinage des bobines 310.

Ici, la deuxième étape consiste à enrouler, autour de chaque dent du corps de stator 302 et autour de deux parois latérales 312A de deux éléments d'isolation 312 adjacents, un fil électrique, pouvant être, par exemple, en cuivre, jusqu'à obtenir la forme de la bobine 310, notamment une forme de « O » allongé, c'est-à-dire que la bobine 310 forme une boucle avec un espace vide au centre.

Le procédé de fabrication comprend, en outre, une troisième étape d'assemblage des flaques 324 sur le corps de stator 302.

Ici, la troisième étape consiste à positionner une extrémité des éléments d'isolation 312 et une extrémité des bobines 310 à l'intérieur des logements 326 des flasques 324.

Le procédé de fabrication comprend, en outre, une quatrième étape d'assemblage des premier et deuxième bols 314, 318 sur le corps de stator 302.

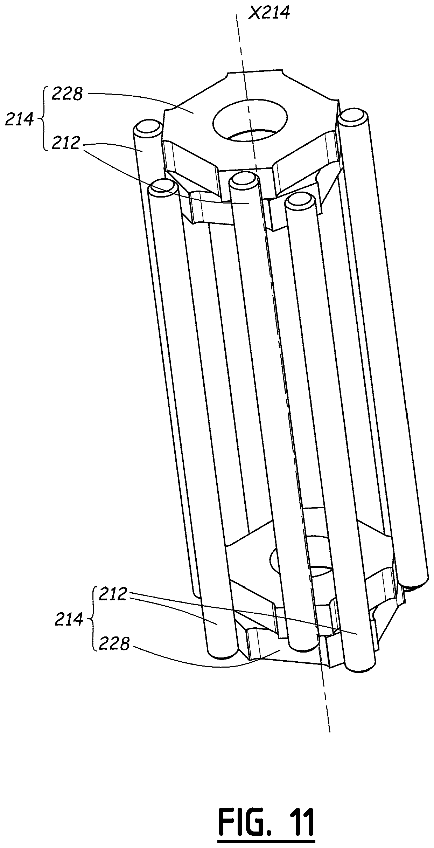

Dans un deuxième mode de réalisation, qui n'appartient pas à l'invention, le rotor 200 peut ne comprendre que deux cages d'écureuil 214, comme montré à la figure 11. Dans ce cas, l'angle α vaut 45 degrés.

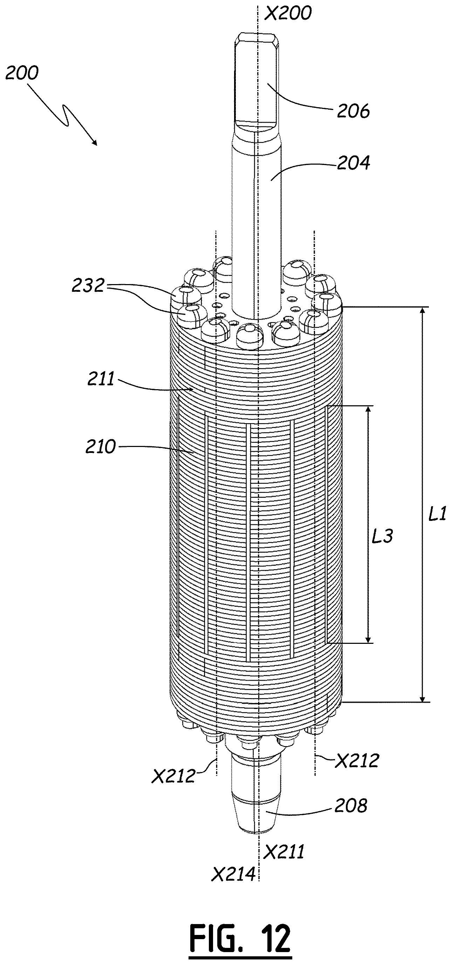

On décrit à présent, plus en détail et en référence aux figures 12 à 15, un troisième mode de réalisation, qui appartient à l'invention, du rotor 200 du moteur électrique 16 de l'actionneur électromécanique 11 illustré à la figure 3. Dans ce troisième mode de réalisation, tous les éléments du moteur électrique 16 qui sont identiques à ceux du premier mode de réalisation décrit ci-dessus conservent les mêmes références. Ci-dessous, seules les différences entre ces modes de réalisation sont décrites.

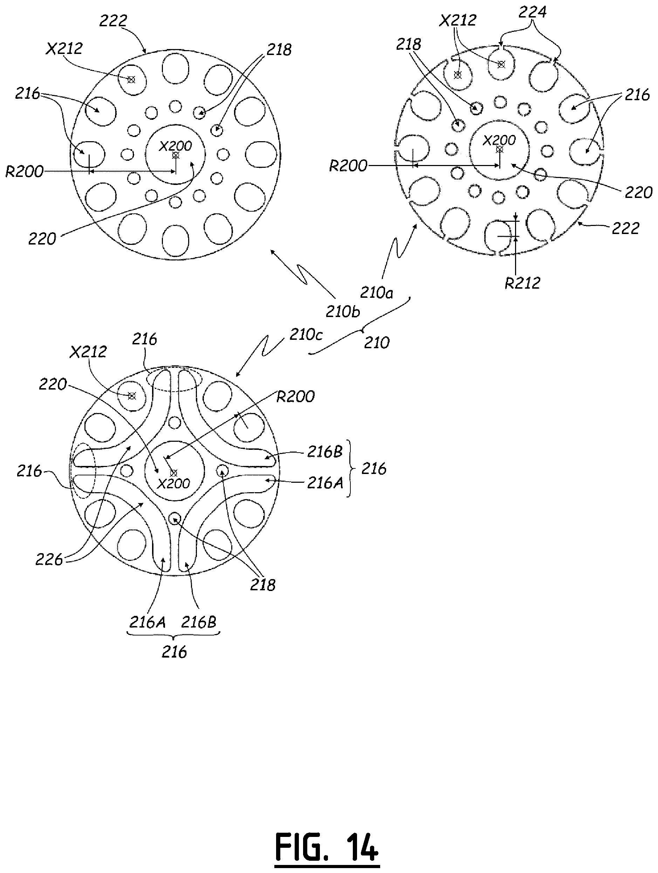

Dans ce troisième mode de réalisation, le paquet de tôles 211 comprend des tôles 210 qui sont de différents types, en particulier au nombre de trois, notés « 210a », « 210b » et « 210c ». Ces trois types de tôles 210a, 210b, 210c sont visibles à la figure 14. Les tôles de type 210a sont également appelées par la suite premières tôles. Les tôles de type 210b sont également appelées par la suite deuxièmes tôles. En outre, les tôles de type 210c sont également appelées par la suite troisièmes tôles.

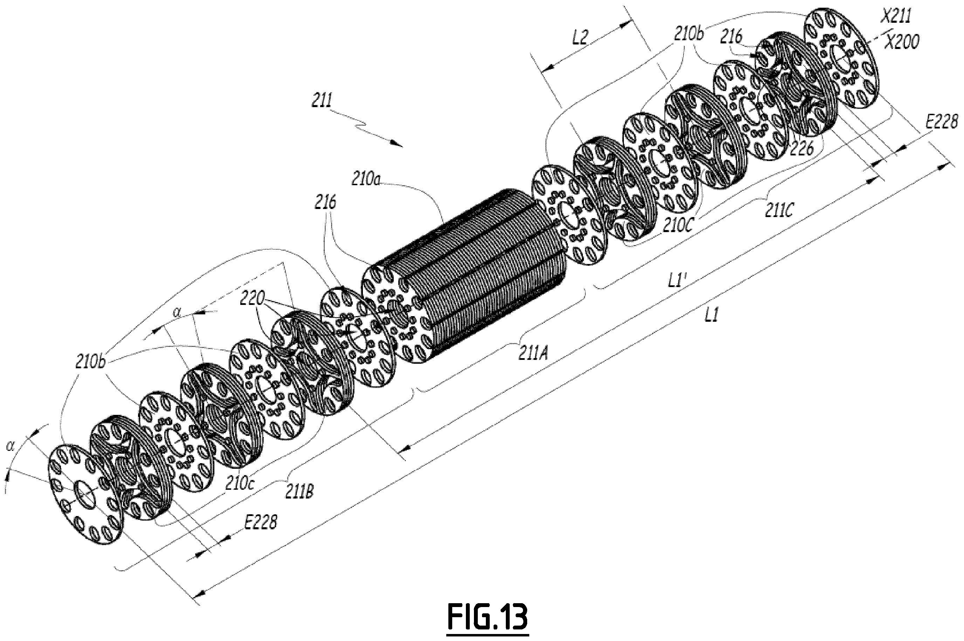

L'assemblage de ces trois types de tôles 210a, 210b, 210c en un paquet de tôles 211 est visible à la figure 13.

Les premières tôles 210a sont des tôles dites « magnétiques ». Les deuxièmes tôles 210b sont des tôles dites « isolantes ».

Les deuxièmes tôles 210b sont configurées pour isoler électriquement, autrement dit isolent électriquement, les barres conductrices 212 entre elles.

Les troisièmes tôles 210c sont des tôles dites « de court-circuit ». Les troisièmes tôles 210c sont configurées pour relier électriquement, autrement dit relient électriquement, certaines barres conductrices 212 entre elles comme décrit ci-après.

Les premières tôles 210a sont identiques aux tôles 210a décrites en référence au premier mode de réalisation.

Les deuxièmes et troisièmes tôles 210b, 210c comprennent des perçages 216, 220 et des bossages 218 analogues à ceux des tôles 210a décrites en référence au premier mode de réalisation, mais ne comprennent pas d'encoches 224 comme les tôles 210a décrites en référence au premier mode de réalisation.

Ici, les troisièmes tôles 210c comprennent, en outre, des lumières 226, pouvant être, par exemple, en forme d'arcs de cercle, dont la concavité est tournée à l'opposé de leur orifice central 220. En outre, les lumières 226 sont configurés pour loger, autrement dit logent, les anneaux de court-circuit 228, en particulier dans la configuration assemblée du rotor 200.

En variante, non représentée, les lumières 226 ont une forme différente, par exemple une forme de segment de droite.

Quelle que soit la forme des lumières 226, chaque lumière 226 relie deux perçages périphériques 216 non adjacents d'une tôle 210c.

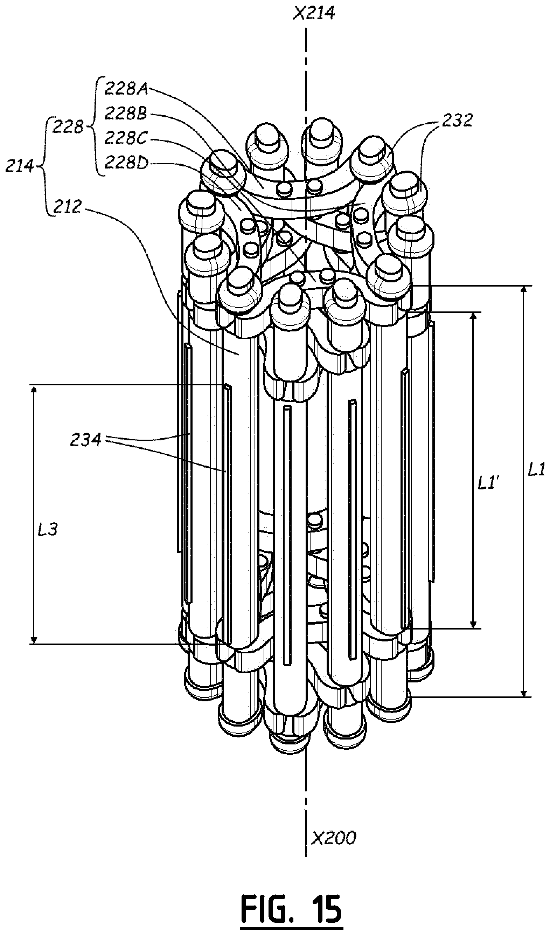

Les anneaux de court-circuit 228 diffèrent des anneaux de court-circuit 228 décrits en référence au premier mode de réalisation, notamment, par leur forme et par leur fabrication. Chaque anneau de court-circuit 228 est formé d'une pluralité d'arcs de cercle 228A, 228B, 228C, 228D reliés entre eux, pouvant être, par exemple, au nombre de quatre comme illustré à la figure 15.

Ainsi, un empilement de troisièmes tôles 210c permet de loger un anneau de court-circuit 228 formé par plusieurs arcs de cercle 228A, 228B, 228C, 228D. La géométrie des arcs de cercle 228A, 228B, 228C, 228D est définie par celle des lumières 226 des troisièmes tôles 210c.

Il est à noter que les troisièmes tôles 210c présentent des perçages périphériques 216 dont certains sont différents des perçages périphériques 216 des premières et deuxièmes tôles 210a, 210b.

En effet, en référence à la figure 13, quatre des douze perçages périphériques 216, dont deux sont entourés en traits pointillés, sont formés par les extrémités de deux lumières 226. En d'autres termes, les perçages périphériques 216 auxquels les lumières 226 sont reliées sont formés de deux perçages indépendants mais adjacents, notés respectivement 216A et 216B.

De cette manière, lorsqu'une troisième tôle 210c est empilée avec une deuxième tôle 210b ou une première tôle 210a, les deux perçages indépendants 216A, 216B sont au moins partiellement en vis-à-vis d'un perçage périphérique 216 de la deuxième tôle 210b ou de la première tôle 210a, c'est-à-dire qu'il y a une continuité entre les perçages périphériques 216 des premières, deuxièmes et troisièmes tôles 210a, 210b, 210c, de sorte à loger une barre conductrice 212, en particulier continue, comme visible à la figure 15.

Avantageusement, chacune des lumières 226 d'une troisième tôle 210c est configurée pour relier, autrement dit relie, le perçage 216A appartenant à un perçage périphérique 216 de la troisième tôle 210c au perçage 216B appartenant à un autre perçage périphérique 216 de la même troisième tôle 210c.

Ainsi, une lumière 226 permet de relier deux barres conductrices 212 appartenant à une même cage d'écureuil 214 à l'aide d'un arc de cercle 228A, 228B, 228C, 228D d'un anneau de court-circuit 228 disposé dans cette lumière 226.

Avantageusement, chaque barre conductrice 212 d'une cage d'écureuil 214 est reliée aux deux barres conductrices 212 appartenant à la même cage d'écureuil 214 qui lui sont les plus proches par des arcs de cercle 228A, 228B, 228C, 228D des anneaux de court-circuit 228, qui appartiennent donc à cette cage d'écureuil 214.

Ainsi, toutes les barres conductrices 212 d'une même cage d'écureuil 214 sont reliées entre elles par les anneaux de court-circuit 228.

De cette manière, les troisièmes tôles 210c comprennent donc autant de lumières 226 que les cages d'écureuil 214 comprennent de barres conductrices 212.

Ici et comme illustré aux figures 13 et 14, les troisièmes tôles 210c comprennent chacune quatre lumières 226.

Par conséquent, puisque le rotor 200 comprend plusieurs cages d'écureuil 214, on comprend qu'en fonction de l'orientation d'une troisième tôle 210c, ses lumières 226 et donc les anneaux de court-circuit 228 relient les barres conductrices 212 d'une cage d'écureuil 214 donnée.

Avantageusement, plusieurs troisièmes tôles 210c orientées de la même manière sont juxtaposées, en particulier dans la configuration assemblée du rotor 200, de sorte que leurs lumières 226 sont juxtaposées de manière continue le long de l'axe X211.

Ainsi, une telle disposition de plusieurs troisièmes tôles 210c permet d'accueillir un anneau de court-circuit 228 d'épaisseur E228 plus importante, cette épaisseur E228 étant mesurée parallèlement à l'axe longitudinal X211 du paquet de tôles 211.

Ici et comme illustré à la figure 13, les premières, deuxièmes et troisièmes tôles 210a, 210b, 210c du paquet de tôles 211 sont agencées selon un ordre spécifique.

Avantageusement, le paquet de tôle 211 comprend trois zones spécifiques : une première extrémité 211B, une partie centrale 211A, correspondant au noyau du rotor 211A décrit en référence au premier mode de réalisation, et une deuxième extrémité 211C.

Ici et comme illustré à la figure 13, la première extrémité 211B comprend, à partir de l'extérieur du rotor 200 vers la partie centrale 211A, des tôles 210 empilées dans l'ordre suivant :
- une ou plusieurs deuxièmes tôles 210b, formant la ou les tôles 210 les plus extérieures du paquet de tôles 211,
- un premier groupe de troisièmes tôles 210c, celles-ci étant toutes orientées selon une première orientation de référence autour de l'axe X211 et étant disposées au plus proche de la ou des deuxièmes tôles 210b les plus extérieures de l'extrémité 211Bdu paquet de tôles 211,
- une ou plusieurs deuxièmes tôles 210b,
- un deuxième groupe de troisièmes tôles 210c, celles-ci étant toutes orientées selon une deuxième orientation autour de l'axe X211, décalée angulairement par rapport à la première orientation de référence de l'angle α, en particulier d'une valeur de 30 degrés,
- une ou plusieurs deuxièmes tôles 210b,
- un troisième groupe de troisièmes tôles 210c, celles-ci étant toutes orientées selon une troisième orientation autour de l'axe X211, décalée angulairement par rapport à la première orientation de référence de deux fois l'angle α, en particulier d'une valeur de 60 degrés, et étant disposées au plus proche de la partie centrale 211A du paquet de tôles 211, et
- une ou plusieurs deuxièmes tôles 210b.

De manière générale, la première extrémité 211B comprend autant de groupes de troisièmes tôles que le rotor 200 comprend de cages d'écureuil 214 et ces groupes de troisièmes tôles 210c sont séparés les uns des autres par une ou plusieurs deuxièmes tôles 210b.

De manière générale, deux groupes de troisièmes tôles 210c, adjacents selon l'axe X211, sont décalés angulairement, autour de cet axe X211, de l'angle α.

Ici et comme illustré à la figure 13, la partie centrale 211A du paquet de tôles 211 comprend uniquement des premières tôles 210a. Cette partie centrale 211A du paquet de tôles 211 correspond au noyau du rotor 211A décrit en référence au premier mode de réalisation.

Ici et comme illustré à la figure 13, la deuxième extrémité 211C du paquet de tôles 211 comprend un empilement de deuxièmes et troisièmes tôles 210b, 210c identique à l'empilement de deuxièmes et troisièmes tôles 210b, 210c de la première extrémité 211B.

Ici et comme illustré à la figure 13, au niveau de la deuxième extrémité 211C, le premier groupe de troisièmes tôles 210c orientées selon la première orientation de référence est disposé au plus proche de la partie centrale 211A et le troisième groupe de troisièmes tôles 210c orientées selon la troisième orientation est disposé au plus proche de la ou des deuxièmes tôles 210b les plus extérieures de l'extrémité 211C du paquet de tôles 211. En d'autres termes, la succession d'empilement des deuxièmes tôles 210b et des troisièmes tôles 210c est mise en oeuvre dans le même ordre suivant l'axe X211 pour les deux extrémités 211B, 211C du paquet de tôles 211.

Ainsi, la deuxième extrémité 211C n'est pas une symétrie de la première extrémité 211B, par rapport à la partie centrale 211A, mais correspond à une translation de cette première extrémité 211B par rapport à la partie centrale 211A, c'est-à-dire à un décalage axial le long de l'axe X211.

De cette manière, le paquet de tôles 211 n'est donc pas symétrique.

Par conséquent, on comprend que les premières tôles 210a de la partie centrale 211A, qui forment le noyau de rotor, sont disposées entre les anneaux de court-circuit 228 des cages d'écureuil 214.

Grâce à cet assemblage de premières, deuxièmes et troisièmes tôles 210a, 210b, 210c, les barres conductrices 212 de chaque cage d'écureuil 214 sont reliées entre elles par deux anneaux de court-circuit 228, disposés respectivement au niveau de la première extrémité 211B et de la deuxième extrémité 211C du paquet de tôles 211.

Ainsi, les barres conductrices 212 de chaque cage d'écureuil 214 forment, avec les anneaux de court-circuit 228 de cette cage d'écureuil 214, un circuit électrique continu.

Avantageusement, tous les perçages périphériques 216 des premières, deuxièmes et troisièmes tôles 210a, 210b, 210c sont disposés à une distance identique, définie par un rayon R200, de l'axe X200, comme illustré à la figure 14. En outre, toutes les barres conductrices 212 de toutes les cages d'écureuil 214 sont équidistantes de l'axe X200.

On comprend que la longueur utile L3 des barres conductrices 212 est ici égale à la distance entre un anneau de court-circuit 228 parmi les anneaux de court-circuit 228 de la première extrémité 211A et l'anneau de court-circuit 228 de la même cage d'écureuil 214 parmi les anneaux de court-circuit 228 de la deuxième extrémité 211C.

Avantageusement, les barres conductrices 212 appartenant à des cages d'écureuil 214 distinctes ne sont pas connectées électriquement en raison de la présence de la ou des deuxièmes tôles 210b entre les groupes des troisièmes tôles 210c.

Ainsi, les anneaux de court-circuit 228 ne sont pas en contact grâce à ces deuxièmes tôles 210b.

De cette manière, chaque cage d'écureuil 214 forme un circuit électrique continu et isolé des autres cages d'écureuil 214, c'est-à-dire indépendant d'un point de vue électrique.

Par conséquent, les anneaux de court-circuit 228 d'une cage d'écureuil 214, sont décalées, selon l'axe X214, des anneaux de court-circuit 228 des autres cages d'écureuil 214.

Ici, le rotor 200 comprend donc trois circuits électriques indépendants.

Avantageusement, grâce à l'agencement des premières, deuxièmes et troisièmes tôles 210a, 210b, 210c dans le paquet de tôles 211, la longueur L1 des barres conductrices 212 est constante, mesurée parallèlement à l'axe X214.

Avantageusement, la longueur L1', mesurée parallèlement à l'axe X214, entre les premier et deuxième anneaux de court-circuit 228 d'une même cage d'écureuil 214 est identique pour chacune des cages d'écureuil 214.

Ici et comme visible à la figure 12, chaque barre conductrice 212 traverse entièrement le paquet de tôles 211 et dépasse des deux côtés du paquet de tôles 211, de sorte à former une protrusion de maintien 232. La longueur L1 des barres conductrices 212 est mesurée entre ces protrusions de maintien 232. En outre, la longueur L1 correspond ici à la longueur du paquet de tôles 211.

Dans cet exemple également, la longueur L3 est la longueur utile d'une barre conductrice 212.

Ici et comme illustré à la figure 12, les trois cages d'écureuil 214 ne sont pas identiques mais ont toutes une longueur totale L1 identique et leurs barres conductrices 212 ont une longueur utile L3 identique.

Ici et comme illustré à la figure 13, les anneaux de court-circuit 228 des cages d'écureuil 214 sont décalés les uns des autres d'une longueur L2 correspondant à la somme de l'épaisseur d'un groupe de troisièmes tôles 210c et de l'épaisseur de la ou des deuxièmes tôles 210b séparant deux groupes de troisièmes tôles 210c.

Ici, chaque groupe de troisièmes tôles 210c permet de loger un anneau de court-circuit 228 reliant les barres conductrices 212 d'une même cage d'écureuil 214.

Ainsi, chacune des première et deuxième extrémités 211B, 211C du paquet de tôles 11 comprend autant de groupes de troisièmes tôles 210c que le rotor 200 comprend de cages d'écureuil 214.

Ici, le décalage angulaire entre deux groupes adjacents de troisièmes tôles 210c d'une même extrémité 211B, 211C du paquet de tôles 211 est égal au décalage angulaire α.

Ainsi, deux groupes adjacents de troisièmes tôles 210c permet de loger un anneau de court-circuit 228 distinct reliant les barres conductrices 212 de cages d'écureuil 214 distinctes.

De cette manière, les cages d'écureuil 214 sont décalées angulairement entre elles d'un angle égal à α.

Ici et comme illustré à la figure 15, les trois cages d'écureuil 214 du rotor 200 sont imbriquées, autrement dit entremêlées, c'est-à-dire que pour chaque cage d'écureuil 214, au moins l'un des anneaux de court-circuit 228 est disposé entre les barres conductrices 212 d'une autre cage d'écureuil 214.

On décrit à présent un mode d'exécution d'un procédé de fabrication du rotor 200, illustré aux figures 12 à 15, pour le moteur électrique 16 conforme à l'invention.

Le procédé de fabrication une première étape d'assemblage du paquet de tôles 211 par empilage des premières, deuxièmes et troisièmes tôles 210a, 210b, 210c, selon l'agencement décrit précédemment.

Avantageusement, les premières, deuxièmes et troisièmes tôles 210a, 210b, 210c peuvent être maintenues assemblées ensemble, par exemple par agrafage et/ou par soudage. Le maintien des premières, deuxièmes et troisièmes tôles 210a, 210b, 210c par agrafage consiste en une déformation de celles-ci, au moyen de protrusions de maintien tels que, par exemple, les bossages 218. Les bossages 218 permettre de garantir l'empilage des premières, deuxièmes et troisièmes tôles 210a, 210b, 210c 210 en les positionnant sans mouvement angulaire entre elles. Le maintien des premières, deuxièmes et troisièmes tôles 210a, 210b, 210c ensemble formant le paquet de tôles 211 peut être mis en oeuvre en comprimant celles-ci, en particulier au moyen d'une presse. Une hauteur prédéterminée du paquet de tôles 11 peut ainsi être obtenue en définissant le nombre de premières, deuxièmes et troisièmes tôles 210a, 210b, 210c.

Le procédé de fabrication comprend, en outre, une deuxième étape d'injection d'un matériau électriquement conducteur, par exemple du cuivre ou de l'aluminium, dans le paquet de tôles 211, en particulier dans les espaces vides du paquet de tôles 211, correspondant en pratique aux perçages périphériques 216 des premières, deuxièmes et troisièmes tôles 210a, 210b, 210c, aux encoches 224 des premières tôles 210a et aux lumières 226 des troisièmes tôles 210c.

Ainsi, ce matériau, en se répartissant à l'intérieur du paquet de tôles 211, forme par moulage les cages d'écureuil 214, c'est-à-dire les barres conductrices 212 et les anneaux de court-circuit 228, qui sont donc monoblocs. Cette fabrication par moulage permet d'obtenir plusieurs cages d'écureuil 214 imbriquées sans devoir recourir à des opérations de soudage ou de brasage.

En outre, au cours de cette deuxième étape, les protrusions 232 des barres conductrices 212 sont également formées.

Le procédé de fabrication comprend, en outre, une troisième étape d'usinage du corps de rotor 202.

Ici, la troisième étape consiste à usiner l'extérieur du corps de rotor 202, de sorte à obtenir une forme cylindrique, en éliminant, par exemple, des bavures du matériau injecté.

Le procédé de fabrication comprend, en outre, une quatrième étape de mise en place de l'arbre de rotor 204 au travers du perçage central 220 de chacune des premières, deuxièmes et troisièmes tôles 210a, 210b, 210c du paquet de tôles 211.

Ici, la quatrième étape consiste à insérer l'arbre de rotor 204 dans le corps de rotor 202 au travers des perçages centraux 220 des premières, deuxièmes et troisièmes tôles 210a, 210b, 210c. L'arbre de rotor 204 est ensuite maintenu solidairement du corps de rotor 202 parce que l'arbre de rotor 204 est monté serré par rapport au corps de rotor 202.

En pratique, la troisième étape est optionnelle.

L'ordre des étapes du précédé de fabrication du rotor 200 peut être différent de l'ordre décrit ci-dessus.

En particulier, l'ordre des troisième et quatrième étapes peut être inversé.

En particulier, la quatrième étape consistant à insérer l'arbre de rotor 204 dans le corps de rotor 202 peut être mise en oeuvre avant la deuxième étape d'injection du matériau électriquement conducteur dans le paquet de tôles 211.

Ici, la forme des barres conductrices 212, obtenues lors de la deuxième étape, est déterminée par la forme des perçages périphériques 216.

Ainsi, les barres conductrices 212 peuvent avoir une forme différente si ces perçages périphériques 216 ont une forme différente, par exemple globalement triangulaire ou hexagonale.

Ici, au niveau des troisièmes tôles 210c, une barre conductrice 212 n'a pas la même forme qu'au niveau des premières ou deuxièmes tôles 210a, 210b, du fait que les perçages périphériques 216 des troisièmes tôles 210c sont formés de deux perçages indépendants 216A, 216B. Cette variation de forme n'a pas d'impact sur le comportement des barres conductrices 212 au sein du rotor 200.

Ici, dans la partie centrale 211A du paquet de tôles 211, c'est-à-dire au niveau du noyau de rotor, les barres conductrices 212 remplissent également les encoches 224 des premières tôles 210a, jusqu'au bord extérieur 222 des premières tôles 210a et portent des nervures 234, telles qu'illustrées à la figure 15.

Grâce à la présente invention, un rotor comprenant plusieurs cages d'écureuil identiques, imbriquées entre elles et indépendantes d'un point de vue électrique permet de réduire les effets, voire de supprimer les effets, des harmoniques inverses provoquant un freinage du rotor, lorsque le moteur électrique est activé électriquement.

Ainsi, chaque cage d'écureuil fournit un couple moteur identique.

De cette manière, le moteur électrique comprenant un tel rotor est plus performant.

En outre, l'imbrication des cages d'écureuil permet de réaliser un rotor où, d'une part, toutes les barres conductrices sont équidistantes de l'axe central du rotor et, d'autre part, la longueur utile des barres conductrices de chaque cage d'écureuil est constante.

De nombreuses modifications peuvent être apportées aux exemples de réalisation décrits précédemment sans sortir du cadre de l'invention défini par les revendications.

En variante, non représentée, les barres conductrices 212 s'étendent chacune en s'enroulant autour d'un cylindre passant par les perçages périphériques 216 des tôles 210 et dont la génératrice est confondue avec l'axe de rotation X. En d'autres termes, les barres conductrices 212 sont obliques, ou inclinées, par rapport à l'axe de rotation X, et l'angle d'inclinaison entre les barres conductrices 212 et l'axe de rotation X est identique pour toutes les barres conductrices 212. Dans une telle variante, les barres conductrices 212 sont également équidistantes de l'axe central X200 du rotor 200. En outre, le décalage angulaire entre les deux extrémités d'une barre conductrice 212 est égal à l'angle α. Ainsi, l'utilisation de cages d'écureuil 214 à barres conductrices 212 obliques permet d'obtenir un couple moteur constant, quel que soit la position angulaire du rotor 200 autour de l'axe de rotation X. Pour obtenir une telle configuration des barres conductrices 212, le paquet de tôles 211 est agencé de manière à ce que toutes les tôles 210 soient progressivement décalées angulairement les unes des autres, d'un angle correspondant au résultat de la division de l'angle α par le nombre de tôles 210, de sorte à ce que la somme des angles de décalage de toutes les tôles 210 soit égal à l'angle α. En d'autres termes, les deux tôles 210 les plus extérieures du paquet de tôles 211, c'est-à-dire la tôle 210 la plus proche de la première extrémité 206 et la tôle 210 la plus proche de la deuxième extrémité 208 de l'arbre de rotor 204, sont décalées angulairement d'un angle α.

En variante, non représentée, le nombre de cages d'écureuil 214 est supérieur ou égal à quatre.

En variante, non représentée, le nombre de barres conductrices 212 par cage d'écureuil 214 est différent de quatre et peut être, par exemple, égal à trois ou à cinq.

La présence des encoches 224 sur les tôles magnétiques 210a n'est pas obligatoire au fonctionnement du rotor 200. Ainsi, en variante non représentée, les tôles magnétiques 210a peuvent être dépourvues des encoches 224.

Les modes de réalisation et variantes envisagés peuvent être combinés pour générer de nouveaux modes de réalisation de l'invention, sans sortir du cadre de l'invention défini par les revendications.

## Revendications

1. Rotor (200) pour un moteur électrique (16) comprenant au moins :
- un arbre de rotor (204), l'arbre de rotor (204) s'étendant selon un axe central (X200) du rotor (200),
- au moins deux cages d'écureuil (214), chaque cage d'écureuil (214) comprenant au moins deux barres conductrices (212) et au moins deux anneaux de court-circuit (228), les barres conductrices (212) étant reliées entre elles par des anneaux de court-circuit (228), chaque cage d'écureuil (204) étant coaxiale avec l'axe central (X200),
- un paquet de tôles (211), chaque tôle (210) du paquet de tôles (211) comprenant un perçage central (220) de passage de l'arbre de rotor (204) et des perçages périphériques (216) de passage des barres conductrices (212),
- les cages d'écureuil (214) étant imbriquées entre elles, pour chaque cage d'écureuil (214), au moins l'un des anneaux de court-circuit (228) étant disposé entre les barres conductrices (212) d'une autre cage d'écureuil (214),
- les cages d'écureuil (214) étant décalées angulairement entre elles d'un angle (α) constant,
- les cages d'écureuil (214) étant électriquement indépendantes les unes des autres,
- toutes les barres conductrices (212) de toutes les cages d'écureuil (214) étant équidistantes de l'axe central (X200) du rotor (200),
- le paquet de tôles (211) étant de forme cylindrique et comprenant une partie centrale (211A) et deux extrémités (211B, 211C),
- la partie centrale (211A) du paquet de tôles (211) comprenant des tôles magnétiques (210a),
- la partie centrale (211A) du paquet de tôles (211) étant entièrement traversée par l'arbre de rotor (204) et par les barres conductrices (212),
- chaque extrémité (211B, 211C) du paquet de tôles (211) comprenant un empilement de tôles (210b, 210c) alternant entre des tôles isolantes (210b) et des tôles de court-circuit (210c),
- l'empilement de tôles (210b, 210c) de chacune des deux extrémités (211B, 211C) du paquet de tôles (211) étant mis en oeuvre dans le même ordre selon l'axe central (X200) du rotor (200),
- chaque extrémité (211B, 211C) du paquet de tôles (211) comprenant autant de groupes de tôles de court-circuit (210c) que le rotor (200) comprend de cages d'écureuil (214),
- deux groupes de tôles de court-circuit (210c) adjacents étant décalés angulairement d'un angle égal à l'angle (α) de décalage des cages d'écureuil (214), et
- les tôles de court-circuit (210c) comprenant des lumières (226), les lumières (226) logeant les anneaux de court-circuit (228).

2. Rotor (200) pour un moteur électrique (16) selon la revendication 1, **caractérisé en ce que** toutes les barres conductrices (212) de toutes les cages d'écureuil (214) présentent une longueur utile (L3) identique.

3. Rotor (200) pour un moteur électrique (16) selon la revendication 1 ou selon la revendication 2, **caractérisé**
**en ce que** les barres conductrices (212) de chaque cage d'écureuil (214) sont alignées le long de l'axe central (X200) du rotor (200),
et **en ce que** les anneaux de court-circuit (228) de l'une des cages d'écureuil (214) sont décalés des anneaux de court-circuit (228) d'une autre des cages d'écureuil (214), le long de l'axe central (X200) du rotor (200).

4. Rotor (200) pour un moteur électrique (16) selon l'une quelconque des revendications 1 à 3, **caractérisé en ce que** les barres conductrices (212) de chacune des cages d'écureuil (214) sont obliques par rapport à l'axe central (X200) du rotor (200).

5. Rotor (200) pour un moteur électrique (16) selon l'une quelconque des revendications 1 à 4, **caractérisé**
**en ce que** le rotor (200) comprend trois cages d'écureuil (214), chaque cage d'écureuil (214) comprenant quatre barres conductrices (212),
et **en ce que** l'angle de décalage (α) des cages d'écureuil (214) entre elles est égal à 30 degrés.

6. Moteur électrique (16) comprenant au moins :
- un rotor (200), et
- un stator (300), le rotor (200) et le stator (300) étant positionnés de manière coaxiale autour d'un axe central (X200) du rotor (200),
**caractérisé en ce que** le rotor (200) est conforme à l'une quelconque des revendications 1 à 5.

7. Moteur électrique (16) selon la revendication 6, **caractérisé en ce que** le stator (300) comprend un corps de stator (302) à bobinage dentaire.

8. Procédé de fabrication d'un rotor (200) pour un moteur électrique (16), le rotor (200) étant selon l'une quelconque des revendications 1 à 5, ce procédé de fabrication comprenant au moins les étapes suivantes :
f) assembler le paquet de tôles (211) par empilage de tôles (210a, 210b, 210c),
g) injecter un matériau électriquement conducteur dans le paquet de tôles (211) pour former, par moulage, les cages d'écureuil (214), et
h) mettre en place l'arbre de rotor (204) au travers du perçage central (220) de chacune des tôles (210a, 210b, 210c) du paquet de tôles (211).

## Patentansprüche

1. Rotor (200) für einen Elektromotor (16) mindestens umfassend:
- eine Rotorwelle (204), wobei sich die Rotorwelle (204) entlang einer Mittelachse (X200) des Rotors (200) erstreckt,
- mindestens zwei Käfigwicklungen (214), jede Käfigwicklung (214) umfassend mindestens zwei Stromschienen (212) und mindestens zwei Kurzschlussringe (228), wobei die Stromschienen (212) durch Kurzschlussringe (228) miteinander verbunden sind, wobei jede Käfigwicklung (204) koaxial zu der Mittelachse (X200) ist,
- ein Blechpaket (211), jedes Blech (210) des Blechpakets (211) umfassend eine mittlere Bohrung (220) zum Durchführen der Rotorwelle (204) und Umfangsbohrungen (216) zum Durchführen der Stromschienen (212),
- wobei die Käfigwicklungen (214) miteinander verschachtelt sind, wobei für jede Käfigwicklung (214) mindestens einer der Kurzschlussringe (228) zwischen den Stromschienen (212) einer anderen Käfigwicklung (214) angeordnet ist,
- wobei die Käfigwicklungen (214) winklig um einen konstanten Winkel (α) zueinander versetzt sind,
- wobei die Käfigwicklungen (214) elektrisch voneinander unabhängig sind,
- wobei alle Stromschienen (212) aller Käfigwicklungen (214) gleich weit von der Mittelachse (X200) des Rotors (200) entfernt sind,
- wobei das Blechpaket (211) zylindrisch geformt ist und einen Mittelteil (211A) und zwei Enden (211B, 211C) umfasst,
- der Mittelteil (211A) des Blechpakets (211) Magnetbleche (210a) umfasst,
- wobei der Mittelteil (211A) des Blechpakets (211) vollständig von der Rotorwelle (204) und den Stromschienen (212) durchdrungen ist,
- jedes Ende (211 B, 211C) des Blechpakets (211) einen Stapel von Blechen (210b, 210c) umfasst, die sich zwischen Isolierblechen (210b) und Kurzschlussblechen (210c) abwechseln,
- wobei das Stapeln der Bleche (210b, 210c) von jedem der zwei Enden (211B, 211C) des Blechpakets (211) in der gleichen Reihenfolge entlang der Mittelachse (X200) des Rotors (200) durchgeführt wird,
- jedes Ende (211B, 211C) des Blechpakets (211) umfassend so viele Gruppen von Kurzschlussblechen (210c), wie der Rotor (200) Käfigwicklungen (214) umfasst,
- zwei benachbarte Gruppen von Kurzschlussblechen (210c) winklig um einen Winkel versetzt sind, der gleich wie der Winkel (α) des Versatzes der Käfigwicklungen (214) ist, und
- die Kurzschlussbleche (210c) Lumen (226) umfassen, wobei die Lumen (226) die Kurzschlussringe (228) aufnehmen.

2. Rotor (200) für einen Elektromotor (16) nach Anspruch 1, **dadurch gekennzeichnet, dass** alle Stromschienen (212) in allen Käfigwicklungen (214) eine identische Nutzlänge (L3) aufweisen.

3. Rotor (200) für einen Elektromotor (16) nach Anspruch 1 oder Anspruch 2, **dadurch gekennzeichnet,**
**dass** die Stromschienen (212) von jeder Käfigwicklung (214) entlang der Mittelachse (X200) des Rotors (200) ausgerichtet sind,
und **dass** die Kurzschlussringe (228) von einem der Käfigwicklungen (214) von den Kurzschlussringen (228) einer anderen der Käfigwicklungen (214) entlang der Mittelachse (X200) des Rotors (200) versetzt sind.

4. Rotor (200) für einen Elektromotor (16) nach einem der Ansprüche 1 bis 3, **dadurch gekennzeichnet, dass** die Stromschienen (212) von jeder der Käfigwicklungen (214) schräg in Bezug auf die Mittelachse (X200) des Rotors (200) sind.

5. Rotor (200) für einen Elektromotor (16) nach einem der Ansprüche 1 bis 4, **dadurch gekennzeichnet,**
**dass** der Rotor (200) drei Käfigwicklungen (214) umfasst, wobei jede Käfigwicklung (214) vier Stromschienen (212) umfasst,
und **dass** der Versatzwinkel (α) der Käfigwicklungen (214) zueinander gleich 30 Grad ist.

6. Elektromotor (16), mindestens umfassend:
- einen Rotor (200), und
- einen Stator (300), wobei der Rotor (200) und der Stator (300) koaxial um eine Mittelachse (X200) des Rotors (200) positioniert sind,
**dadurch gekennzeichnet, dass** der Rotor (200) nach einem der Ansprüche 1 bis 5 ist.

7. Elektromotor (16) nach Anspruch 6, **dadurch gekennzeichnet, dass** der Stator (300) einen Statorkörper (302) mit Zahnwicklung umfasst.

8. Verfahren zur Herstellung eines Rotors (200) für einen Elektromotor (16), wobei der Rotor (200) nach einem der Ansprüche 1 bis 5 ist, wobei das Herstellungsverfahren mindestens die folgenden Schritte umfasst:
f) Zusammensetzen des Blechpakets (211) durch Stapeln von Blechen (210a, 210b, 210c),
g) Einspritzen eines elektrisch leitenden Materials in das Blechpaket (211), um durch Gießen die Käfigwicklungen (214) zu bilden, und
h) Einsetzen der Rotorwelle (204) durch die mittlere Bohrung (220) in jedem der Bleche (210a, 210b, 210c) des Blechpakets (211).

## Claims

1. A rotor (200) for an electric motor (16) comprising at least:
- a rotor shaft (204), the rotor shaft (204) extending along a central axis (X200) of the rotor (200),
- at least two squirrel cages (214), each squirrel cage (214) comprising at least two conductor bars (212) and at least two shorting rings (228), the conductor bars (212) being interconnected by shorting rings (228), each squirrel cage (204) being coaxial with the central axis (X200),
- a stack of sheets (211), each sheet (210) of the stack of sheets (211) comprising a central bore (220) for the passage of the rotor shaft (204) and peripheral bores (216) for the passage of the conductor bars (212),
- the squirrel cages (214) being interleaved with each other, for each squirrel cage (214), at least one of the shorting rings (228) being arranged between the conductor bars (212) of another squirrel cage (214),
- the squirrel cages (214) being angularly offset from each other by a constant angle (α),
- the squirrel cages (214) being electrically independent of each other,
- all conductor bars (212) of all squirrel cages (214) being equidistant from the central axis (X200) of the rotor (200),
- the stack of sheets (211) being cylindrical in shape and comprising a central part (211A) and two ends (211B, 211C),
- the central part (211A) of the stack of sheets (211) comprising magnetic sheets (210a),
- the central part (211A) of the stack of sheets (211) being completely traversed by the rotor shaft (204) and by the conductor bars (212),
- each end (211B, 211C) of the stack of sheets (211) comprising a pile of sheets (210b, 210c) alternating between insulating sheets (210b) and shorting sheets (210c),
- the pile of sheets (210b, 210c) of each of the two ends (211B, 211C) of the stack of sheets (211) being implemented in the same order along the central axis (X200) of the rotor (200),
- each end (211B, 211C) of the stack of sheets (211) comprising as many groups of shorting sheets (210c) as the rotor (200) comprises squirrel cages (214),
- two adjacent sets of shorting sheets (210c) being angularly offset by an angle equal to the angle (α) of offset of the squirrel cages (214), and
- the shorting sheets (210c) comprising apertures (226), the apertures (226) housing the shorting rings (228).

2. A rotor (200) for an electric motor (16) according to claim 1, **characterised in that** all conductor bars (212) of all squirrel cages (214) have an identical effective length (L3).

3. A rotor (200) for an electric motor (16) according to claim 1 or according to claim 2, **characterised**
**in that** the conductor bars (212) of each squirrel cage (214) are aligned along the central axis (X200) of the rotor (200),
and **in that** the shorting rings (228) of one of the squirrel cages (214) are offset from the shorting rings (228) of another of the squirrel cages (214), along the central axis (X200) of the rotor (200).

4. A rotor (200) for an electric motor (16) according to any one of claims 1 to 3, **characterised in that** the conductor bars (212) of each of the squirrel cages (214) are oblique to the central axis (X200) of the rotor (200).

5. A rotor (200) for an electric motor (16) according to any of claims 1 to 4, **characterised in that** the rotor (200) comprises three squirrel cages (214), each squirrel cage (214) comprising four conductor bars (212),
and **in that** the offset angle (α) of the squirrel cages (214) to each other is 30 degrees.

6. Electric motor (16) comprising at least:
- a rotor (200), and
- a stator (300), the rotor (200) and the stator (300) being positioned coaxially about a central axis (X200) of the rotor (200),
**characterised in that** the rotor (200) is in accordance with any one of claims 1 to 5.

7. Electric motor (16) according to claim 6, **characterised in that** the stator (300) comprises a stator body (302) with a toothed winding.

8. A method of manufacturing a rotor (200) for an electric motor (16), the rotor (200) being according to any one of claims 1 to 5, said manufacturing method comprising at least the following steps:
f) assembling the stack of sheets (211) by stacking sheets (210a, 210b, 210c),
g) injecting an electrically conductive material into the stack of sheets (211) to form the squirrel cages (214) by moulding, and
h) inserting the rotor shaft (204) through the central bore (220) of each of the sheets (210a, 210b, 210c) of the stack of sheets (211).
